(19) Europäisches Patentamt / European Patent Office / Office européen des brevets

(11) EP 3 728 437 B1

(12) # EUROPÄISCHE PATENTSCHRIFT

(45) Veröffentlichungstag und Bekanntmachung des Hinweises auf die Patenterteilung:
**09.02.2022 Patentblatt 2022/06**

(21) Anmeldenummer: **18819114.2**

(22) Anmeldetag: **17.12.2018**

(51) Internationale Patentklassifikation (IPC):
***C08K 5/00*** $^{(2006.01)}$ ***C08K 5/132*** $^{(2006.01)}$
***C08K 5/21*** $^{(2006.01)}$ ***C08K 5/3477*** $^{(2006.01)}$

(52) Gemeinsame Patentklassifikation (CPC):
(C-Sets verfügbar)
**C08K 5/21; C08K 5/0041; C08K 5/132; C08K 5/3477** (Forts.)

(86) Internationale Anmeldenummer:
**PCT/EP2018/085186**

(87) Internationale Veröffentlichungsnummer:
**WO 2019/121506 (27.06.2019 Gazette 2019/26)**

(54) **POLYAMID-FORMMASSEN MIT VERBESSERTEN OPTISCHEN EIGENSCHAFTEN UND VERWENDUNG VON FARBMITTELN DARIN**

POLYAMIDE MOULDING MATERIAL WITH IMPROVED OPTICAL PROPERTIES AND USE OF COLOURING AGENTS THEREIN

MATIÈRES DE MOULAGE DE POLYAMIDE À PROPRIÉTÉS OPTIQUES AMÉLIORÉES ET UTILISATION DE COLORANTS CORRESPONDANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2017 EP 17208051**

(43) Veröffentlichungstag der Anmeldung:
**28.10.2020 Patentblatt 2020/44**

(73) Patentinhaber: **BASF SE**
**67056 Ludwigshafen am Rhein (DE)**

(72) Erfinder:
- **RICHTER, Florian**
  **67056 Ludwigshafen (DE)**
- **XALTER, Rainer**
  **67056 Ludwigshafen (DE)**

(74) Vertreter: **BASF IP Association**
**BASF SE**
**GBI-C006**
**67056 Ludwigshafen (DE)**

(56) Entgegenhaltungen:
**WO-A1-2013/139802 WO-A2-2013/139800**

- **DATABASE CA [Online] CHEMICAL ABSTRACTS SERVICE, COLUMBUS, OHIO, US; 17. September 1994 (1994-09-17), NISHIMURA, TOORU ET AL: "Polyamide compositions containing bisureas for moldings", XP002781650, gefunden im STN Database accession no. 1994:535559 -& JP H05 320501 A (TORAY INDUSTRIES) 3. Dezember 1993 (1993-12-03)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 3 728 437 B1

(52) Gemeinsame Patentklassifikation (CPC): (Forts.)

C-Sets
**C08K 5/0041, C08L 77/00;**
**C08K 5/132, C08L 77/00;**
**C08K 5/21, C08L 77/00;**
**C08K 5/3477, C08L 77/00**

## Beschreibung

Die Erfindung betrifft Polyamid-Formmassen mit verbesserten optischen Eigenschaften sowie die Verwendung von Farbmitteln zur Verbesserung dieser optischen Eigenschaften. Die Erfindung betrifft zudem Verfahren zur Herstellung der Formmassen und ihre Verwendung zur Herstellung von Fasern, Formkörpern und Folien sowie die so hergestellten Fasern, Formkörper und Folien.

Polyamide gehören zu den weltweit in großem Umfang hergestellten Polymeren und dienen neben den Hauptanwendungsbereichen Folien, Fasern und Formkörpern (Werkstoffen) einer Vielzahl weiterer Verwendungszwecke. Unter den Polyamiden sind das Polyamid 6 (Polycapro-lactam) und das Polyamid 66 (Nylon, Polyhexamethylenadipinsäureamid) die am meisten hergestellten Polymere. Die meisten technisch bedeutsamen Polyamide sind teilkristalline oder amorphe thermoplastische Polymere, die sich durch eine hohe Temperaturbeständigkeit auszeichnen. Viele Anwendungen für Polyamide erfordern eine Klarheit oder geringe Trübung des Polyamids, um beispielsweise den Inhalt von Verpackungen aus Polyamid erkennen zu können. Daher besteht der Wunsch nach durchsichtigen Polyamiden. Viele Polyamide sind jedoch teilkristallin und damit optisch opak aufgrund der Streuung des einstrahlenden Lichts durch die kristallinen Domänen im Polyamid. Nukleierungsmittel und Klärmittel werden häufig verwendet, um in kristallisierbaren thermoplastischen Polymeren die optischen Eigenschaften zu verbessern.

Die WO 2013/139802 betrifft Polymerzusammensetzungen, die mindestens ein Polyamid-Polymer und mindestens eine Polyharnstoffverbindung einer angegebenen Formel (I) enthalten. Beispielsweise wird (4-Ureidocyclohexyl)harnstoff eingesetzt. Diese Polyharnstoffverbindungen werden zur Verbesserung der Klarheit, Erhöhung der Lichttransmission und Verringerung der Trübung in den Polyamiden eingesetzt. Allerdings weisen die damit ausgerüsteten Polyamidzu-sammensetzungen immer noch eine gewisse verbleibende Trübung auf, welche die Materialien transluzent bzw. semitransparent macht, aber keine glasklare Transparenz ermöglicht.

Aufgabe der vorliegenden Erfindung ist die weitere Verringerung der Trübung bei den bekannten Formmassen.

Die Aufgabe wird erfindungsgemäß gelöst durch die Verwendung von Farbmitteln, ausgewählt aus Anthrachinon-Farbmitteln, Benzimidazolon-Farbmitteln und Perinon-Farbmitteln, in Formmassen, die mindestens ein Polyamid und mindestens eine Verbindung der allgemeinen Formel (I) enthalten

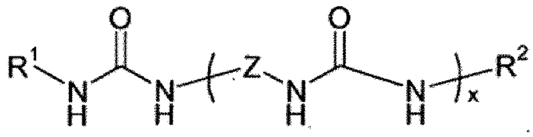

(I),

wobei

x für 1, 2 oder 3 steht;

$R^1$ und $R^2$ unabhängig voneinander aus Wasserstoff, linearem $C_1$-$C_7$-Alkyl, verzweigtem $C_3$-$C_{10}$-Alkyl, unsubstituiertem oder substituiertem $C_3$-$C_{12}$-Cycloalkyl, unsubstituiertem oder substituiertem $C_3$-$C_{12}$-Cycloalkyl-$C_1$-$C_4$-alkyl, unsubstituiertem oder substituiertem Aryl und unsubstituiertem oder substituiertem Aryl-$C_1$-$C_4$-alkyl ausgewählt sind und

Z aus $C_3$-$C_{10}$-Alkandiyl, unsubstituiertem oder substituiertem Arylen, unsubstituiertem oder substituiertem Arylen-$C_1$-$C_4$-alkylen-arylen, unsubstituiertem oder substituiertem Heteroarylen, unsubstituiertem oder substituiertem Heteroarylen-$C_1$-$C_4$-alkylen-heteroarylen, unsubstituiertem oder substituiertem $C_5$-$C_8$-Cyclo-alkylen, unsubstituiertem oder substituiertem $C_5$-$C_8$-Cycloalkylen-$C_1$-$C_4$-alkylen-$C_5$-$C_8$-cyclo-alkylen, unsubstituiertem oder substituiertem Heterocycloalkylen und unsubstituiertem oder substituiertem Heterocycloalkylen-$C_1$-$C_4$-alkylen-heterocycloalkylen ausgewählt ist,

zur Verringerung des Trübungswertes.

Die Aufgabe wird zudem gelöst durch eine Formmasse, enthaltend mindestens ein Polyamid als Komponente A, 0,1 bis 2 Gew.-% mindestens einer Verbindung der allgemeinen Formel (I)

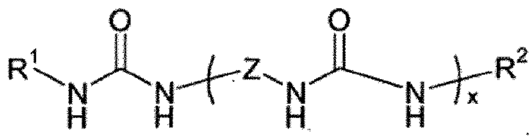

(I),

wobei

x für 1, 2 oder 3 steht,
$R^1$ und $R^2$ unabhängig voneinander aus Wasserstoff, linearem $C_1$-$C_7$-Alkyl, verzweigtem $C_3$-$C_{10}$-Alkyl, unsubstituiertem oder substituiertem $C_3$-$C_{12}$-Cycloalkyl, unsubstituiertem oder substituiertem $C_3$-$C_{12}$-Cycloalkyl-$C_1$-$C_4$-alkyl, unsubstituiertem oder substituiertem Aryl und unsubstituiertem oder substituiertem Aryl-$C_1$-$C_4$-alkyl ausgewählt sind und
Z aus $C_3$-$C_{10}$-Alkandiyl, unsubstituiertem oder substituiertem Arylen, unsubstituiertem oder substituiertem Arylen-$C_1$-$C_4$-alkylen-arylen, unsubstituiertem oder substituiertem Heteroarylen, unsubstituiertem oder substituiertem Heteroarylen-$C_1$-$C_4$-alkylen-heteroarylen, unsubstituiertem oder substituiertem $C_5$-$C_8$-Cyclo-alkylen, unsubstituiertem oder substituiertem $C_5$-$C_8$-Cycloalkylen-$C_1$-$C_4$-alkylen-$C_5$-$C_8$-cyclo-alkylen, unsubstituiertem oder substituiertem Heterocycloalkylen und unsubstituiertem oder substituiertem Heterocycloalkylen-$C_1$-$C_4$-alkylen-heterocycloalkylen ausgewählt ist, als Komponente B sowie

10 bis 1000 ppm mindestens eines Farbmittels, ausgewählt aus Anthrachinon-Farbmitteln, Benzimidazolon-Farbmitteln und Perinon-Farbmitteln und Gemischen davon, als Komponente C,

wobei sich die Mengen auf die gesamte Formmasse beziehen.

Zudem wird die Aufgabe gelöst durch ein Verfahren zur Herstellung derartiger Formmassen, bei dem man die Komponenten A, B und C und gegebenenfalls weitere Inhaltsstoffe miteinander vermischt.

Die Aufgabe wird zudem gelöst durch Verwendung der Formmassen zur Herstellung von Fasern, Folien oder Formkörpern und durch die so hergestellten Fasern, Folien oder Formkörper.

Es wurde erfindungsgemäß gefunden, dass Anthrachinon-Farbmittel, Benzimidazolon-Farbmittel und Perinon-Farbmittel in geringen Einsatzmengen die optischen Eigenschaften von Polyamid-Formmassen, die eine Verbindung der allgemeinen Formel (I) enthalten, deutlich verbessern können. Die Verbesserung betrifft dabei eine Verringerung des Trübungswertes.

Die erfindungsgemäß eingesetzten Formmassen zeigen eine Verringerung des relativen Trübungswertes um mindestens 10 %, vorzugsweise mindestens 20 %, verglichen mit einer Referenzpolyamidzusammensetzung ohne die Farbmittel, bestimmt nach der Methode entsprechend ASTM D1003 (Schichtdicke 1,27 mm);

Vorzugsweise sollte eine relative Trübungs-Abnahme um mindestens 20 % bei 69 ppm Anteil des erfindungsgemäßen Farbmittels eintreten. Vorzugsweise sollte eine relative Trübungsabnahme von mindestens 25 % bei einem Anteil von 156 ppm des erfindungsgemäßen Farbmittels eintreten, jeweils bestimmt nach ASTM D1003 (Schichtdicke 1,27 mm).

Der Begriff "Trübung" (Haze) definiert den Prozentsatz an Lichttransmission, der beim Passieren eines Formkörpers (Platte) vom einstrahlenden Licht um mehr als 2,5 Grad im Mittel abweicht. Der Haze-Wert wird gemäß ASTM D1003 bestimmt. Der Begriff "Klarheit" (clarity) bezieht sich auf die Kleinwinkelstreuung im Bereich kleiner 2,5 Grad und ist ein Maß für die Bildschärfe. Die Bestimmung der Klarheit Wert erfolgt ebenfalls gemäß ASTM D1003.

Der Formkörper sollte im Wesentlichen planparallele Oberflächen haben, die frei von Staub, Fett, Kratzern oder anderen Beeinträchtigungen sind. Der Formkörper sollte auch keine Hohlräume und Einschlüsse aufweisen.

Die erfindungsgemäßen Formmassen enthalten mindestens ein Polyamid. Dabei handelt es sich vorzugsweise um mindestens ein teilkristallines Polyamid. Der Ausdruck "teilkristallin" beschreibt ein Polyamid, das ein Röntgensteuerungsmuster zeigt, das scharfe Banden aufweist, die charakteristisch für kristalline Regionen sind, und diffuse Banden, die charakteristisch für amorphe Regionen sind. Damit beschreibt der Ausdruck "teilkristallin", dass das Polyamid sowohl kristalline als auch amorphe Regionen aufweist.

Die erfindungsgemäße Polyamid-Zusammensetzung enthält als Komponente A wenigstens ein synthetisches Polyamid. Der Begriff "synthetisches Polyamid" wird im Rahmen der Erfindung breit verstanden. Er erfasst ganz allgemein Polymere, die wenigstens eine zur Polyamidbildung geeignete Komponente eingebaut enthalten, die ausgewählt ist unter Dicarbonsäuren, Diaminen, Salzen aus wenigstens einer Dicarbonsäure und wenigstens einem Diamin, Lactamen, ω-Aminosäuren, Aminocarbonsäurenitrilen und Mischungen davon. Neben den zur Polyamidbil-dung geeigneten Komponenten können die erfindungsgemäßen synthetischen Polyamide auch damit copolymerisierbare Monomere einpolymerisiert enthalten. Der Begriff "synthetisches Polyamid" umfasst keine natürlichen Polyamide, wie Peptide und Proteine, z. B. Haare, Wolle, Seide und Eiweiß.

Zur Bezeichnung der Polyamide werden im Rahmen der Erfindung zum Teil fachübliche Kurzzeichen verwendet, die aus den Buchstaben PA sowie darauffolgenden Zahlen und Buchstaben bestehen. Einige dieser Kurzzeichen sind in der DIN EN ISO 1043-1 genormt. Polyamide, die sich von Aminocarbonsäuren des Typs $H_2N$-$(CH_2)_x$-COOH oder den entsprechenden Lactamen ableiten lassen, werden als PA Z gekennzeichnet, wobei Z die Anzahl der Kohlenstoffatome im Monomer bezeichnet. So steht z. B. PA 6 für das Polymere aus ε-Caprolactam bzw. der ω-Aminocapronsäure.

Polyamide, die sich von Diaminen und Dicarbonsäuren der Typen $H_2N-(CH_2)_x-NH_2$ und $HOOC-(CH_2)_y-COOH$ ableiten lassen, werden als PA Z1Z2 gekennzeichnet, wobei Z1 die Anzahl der Kohlenstoffatome im Diamin und Z2 die Anzahl der Kohlenstoffatome in der Dicarbonsäure bezeichnet. Zur Bezeichnung von Copolyamiden werden die Komponenten in der Reihenfolge ihrer Mengenanteile, durch Schrägstriche getrennt, aufgeführt. So ist z. B. PA 66/610 das Copolyamid aus Hexamethylendiamin, Adipinsäure und Sebacinsäure. Für die erfindungsgemäß eingesetzten Monomere mit einer aromatischen oder cycloaliphatischen Gruppe werden folgende Buchstabenkürzel verwendet:

T = Terephthalsäure, I = Isophthalsäure, MXDA = m-Xylylendiamin, IPDA = Isophorondiamin, PACM = 4,4'-Methylenbis(cyclohexylamin), MACM = 2,2'-Dimethyl-4,4'-methylenbis-(cyclohexylamin).

Im Folgenden umfasst der Ausdruck "$C_1$-$C_4$-Alkyl" unsubstituierte, geradkettige und verzweigte $C_1$-$C_4$-Alkylgruppen. Beispiele für $C_1$-$C_4$-Alkylgruppen sind insbesondere Methyl, Ethyl, Propyl, Isopropyl, n-Butyl, Isobutyl, sec.-Butyl, tert.-Butyl (1,1-Dimethylethyl).

Bei den im Folgenden genannten aliphatischen Dicarbonsäuren, cycloaliphatischen Dicarbonsäuren, aromatischen Dicarbonsäuren und Monocarbonsäuren können die Carboxylgruppen jeweils in nicht derivatisierter Form oder in Form von Derivaten vorliegen. Bei Dicarbonsäuren kann keine, eine oder beide Carboxylgruppe(n) in Form eines Derivats vorliegen. Geeignete Derivate sind Anhydride, Ester, Säurechloride, Nitrile und Isocyanate. Bevorzugte Derivate sind Anhydride oder Ester. Anhydride von Dicarbonsäuren können in monomerer oder in polymerer Form vorliegen. Bevorzugte Ester sind Alkylester und Vinylester, besonders bevorzugt $C_1$-$C_4$-Alkylester, insbesondere die Methylester oder Ethylester. Dicarbonsäuren liegen bevorzugt als Mono- oder Dialkylester, besonders bevorzugt Mono- oder Di-$C_1$-$C_4$-alkylester, insbesondere Monomethylester, Dimethylester, Monoethylester oder Diethylester, vor. Dicarbonsäuren liegen weiterhin bevorzugt als Mono- oder Divinylester vor. Dicarbonsäuren liegen weiterhin bevorzugt als gemischte Ester, besonders bevorzugt gemischte Ester mit unterschiedlichen $C_1$-$C_4$-Alkyl-komponenten, insbesondere Methylethylester, vor.

Bevorzugt sind die zur Polyamidbildung geeigneten Komponenten ausgewählt unter

pA) unsubstituierten oder substituierten aromatischen Dicarbonsäuren und Derivaten von unsubstituierten oder substituierten aromatischen Dicarbonsäuren,
pB) unsubstituierten oder substituierten aromatischen Diaminen,
pC) aliphatischen oder cycloaliphatischen Dicarbonsäuren,
pD) aliphatischen oder cycloaliphatischen Diaminen,
pE) Monocarbonsäuren,
pF) Monoaminen,
pG) mindestens dreiwertigen Aminen,
pH) Lactamen,
pI) ω-Aminosäuren,
pK) von pA) bis pI) verschiedenen, damit cokondensierbaren Verbindungen.

Eine geeignete Ausführungsform sind aliphatische Polyamide. Für aliphatische Polyamide vom Typ PA Z1 Z2 (wie PA 66) gilt die Maßgabe, dass mindestens eine der Komponenten pC) oder pD) vorhanden sein muss und keine der Komponenten pA) und pB) vorhanden sein darf. Für aliphatische Polyamide vom Typ PA Z (wie PA 6 oder PA 12) gilt die Maßgabe, dass mindestens die Komponente pH) vorhanden sein muss.

Eine weitere geeignete Ausführungsform sind teilaromatische Polyamide. Für teilaromatische Polyamide gilt die Maßgabe, dass mindestens eine der Komponenten pA) oder pB) und mindestens eine der Komponenten pC) oder pD) vorhanden sein muss.

Die aromatischen Dicarbonsäuren pA) sind bevorzugt ausgewählt unter jeweils unsubstituierter oder substituierter Phthalsäure, Terephthalsäure, Isophthalsäure, Naphthalindicarbonsäuren oder Diphenyldicarbonsäuren und den Derivaten und Mischungen der zuvor genannten aromatischen Dicarbonsäuren.

Substituierte aromatische Dicarbonsäuren pA) weisen vorzugsweise wenigstens einen (z. B. 1, 2, 3 oder 4) $C_1$-$C_4$-Alkylrest auf. Insbesondere weisen substituierte aromatischen Dicarbonsäuren pA) 1 oder 2 $C_1$-$C_4$-Alkylreste auf. Diese sind vorzugsweise ausgewählt unter Methyl, Ethyl, n-Propyl, Isopropyl, n-Butyl, iso-Butyl, sec-Butyl und tert-Butyl, besonders bevorzugt Methyl, Ethyl und n-Butyl, insbesondere Methyl und Ethyl und speziell Methyl. Substituierte aromatische Dicarbonsäuren pA) können auch weitere funktionelle Gruppen tragen, welche die Amidierung nicht stören, wie beispielsweise 5-Sulfoisophthalsäure, ihre Salze und Derivate. Bevorzugtes Beispiel hierfür ist das Natriumsalz des 5-Sulfo-isophthalsäuredimethylesters.

Bevorzugt ist die aromatische Dicarbonsäure pA) ausgewählt unter unsubstituierter Terephthalsäure, unsubstituierter Isophthalsäure, unsubstituierten Naphthalindicarbonsäuren, 2-Chloroterephthalsäure, 2-Methylterephthalsäure, 5-Methylisophthalsäure und 5-Sulfo-isophthalsäure.

Besonders bevorzugt wird als aromatische Dicarbonsäure pA) Terephthalsäure, Isophthalsäure oder ein Gemisch aus Terephthalsäure und Isophthalsäure eingesetzt.

Bevorzugt weisen die teilaromatischen Polyamide einen Anteil von aromatischen Dicarbonsäuren an allen Dicarbonsäuren von wenigstens 50 mol%, besonders bevorzugt von 70 mol% bis 100 mol%, auf. In einer speziellen Ausführungsform weisen die teilaromatischen Polyamide einen Anteil an Terephthalsäure oder Isophthalsäure oder einem Gemisch aus Terephthalsäure und Isophthalsäure bezogen auf alle Dicarbonsäuren von wenigstens 50 mol%, bevorzugt von 70 mol% bis 100 mol%, auf.

Die aromatischen Diamine pB) sind bevorzugt ausgewählt unter Bis-(4-amino-phenyl)-methan, 3-Methylbenzidin, 2,2-Bis-(4-aminophenyl)-propan, 1,1-Bis-(4-aminophenyl)-cyclohexan, 1,2-Diaminobenzol, 1,4-Diaminobenzol, 1,4-Diaminonaphthalin, 1,5-Diaminonaphthalin, 1,3-Diaminotoluol(e), m-Xylylendiamin, N,N'-Dimethyl-4,4'-biphenyl-diamin, Bis-(4-methyl-aminophenyl)-methan, 2,2-Bis-(4-methylaminophenyl)-propan oder Gemische davon.

Die aliphatischen oder cycloaliphatischen Dicarbonsäuren pC) sind vorzugsweise ausgewählt unter Oxalsäure, Malonsäure, Bernsteinsäure, Glutarsäure, Adipinsäure, Pimelinsäure, Korksäure, Azelainsäure, Sebacinsäure, Undecan-$\alpha,\omega$-dicarbonsäure, Dodecan-$\alpha,\omega$-dicarbonsäure, Maleinsäure, Fumarsäure oder Itaconsäure, cis- und trans-Cyclohexan-1,2-dicarbonsäure, cis- und trans-Cyclohexan-1,3-dicarbonsäure, cis- und trans-Cyclohexan-1,4-dicarbonsäure, cis- und trans-Cyclopentan-1,2-dicarbonsäure, cis- und trans-Cyclopentan-1,3-dicarbonsäure und Mischungen davon.

Die aliphatischen oder cycloaliphatischen Diamine pD) sind vorzugsweise ausgewählt unter Ethylendiamin, Propylendiamin, Tetramethylendiamin, Heptamethylendiamin, Hexamethylendi-amin, Pentamethylendiamin, Octamethylendiamin, Nonamethylendiamin, Decamethylendiamin, Undecamethylendiamin, Dodecamethylendiamin, 2-Methylpentamethylendiamin, 2,2,4-Trimethylhexamethylendiamin, 2,4,4-Trimethylhexamethylendiamin, 5-Methylnonamethylendiamin, 2,4-Dimethyloctamethylendiamin, 5-Methylnonandiamin, Bis-(4-aminocyclohexyl)-methan, 3,3'-Dimethyl-4,4'diaminodicyclohexylmethan und Mischungen davon.

Besonders bevorzugt ist das Diamin pD) ausgewählt unter Hexamethylendiamin, 2-Methylpentamethylendiamin, Octamethylendiamin, Nonamethylendiamin, 2-Methyl-1,8-octamethylendiamin, Decamethylendiamin, Undecamethylendiamin, Dodecamethylendiamin, Bis-(4-aminocyclohexyl)-methan, 3,3'-Dimethyl-4,4'diaminodicyclohexylmethan und Mischungen davon.

In einer speziellen Ausführung enthalten die teilaromatischen Polyamide wenigstens ein Diamin pD) einpolymerisiert, das ausgewählt ist unter Hexamethylendiamin, Bis-(4-aminocyclohexyl)-methan (PACM), 3,3'-Dimethyl-4,4'diaminodicyclohexylmethan (MACM), Isophorondiamin (IPDA) und Mischungen davon.

In einer speziellen Ausführung enthalten die teilaromatischen Polyamide als Diamin pD) ausschließlich Hexamethylendiamin einpolymerisiert.

In einer weiteren speziellen Ausführung enthalten die teilaromatischen Polyamide als Diamin pD) ausschließlich Bis-(4-aminocyclohexyl)-methan einpolymerisiert.

In einer weiteren speziellen Ausführung enthalten die teilaromatischen Polyamide als Diamin pD) ausschließlich 3,3'-Dimethyl-4,4'diaminodicyclohexylmethan (MACM) einpolymerisiert.

In einer weiteren speziellen Ausführung enthalten die teilaromatischen Polyamide als Diamin pD) ausschließlich Isophorondiamin (IPDA) einpolymerisiert.

Die aliphatischen und die teilaromatischen Polyamide können wenigstens eine Monocarbonsäure pE) einpolymerisiert enthalten. Die Monocarbonsäuren pE) dienen dabei der Endverkappung der erfindungsgemäß hergestellten Polyamide. Geeignet sind grundsätzlich alle Monocarbonsäuren, die befähigt sind, unter den Reaktionsbedingungen der Polyamidkondensation mit zumindest einem Teil der zur Verfügung stehenden Aminogruppen zu reagieren. Geeignete Monocarbonsäuren pE) sind aliphatische Monocarbonsäuren, alicyclische Monocarbonsäuren und aromatische Monocarbonsäuren. Dazu zählen Essigsäure, Propionsäure, n-, iso- oder tert.-Buttersäure, Valeriansäure, Trimethylessigsäure, Capronsäure, Önanthsäure, Caprylsäure, Pelargonsäure, Caprinsäure, Undecansäure, Laurinsäure, Tridecansäure, Myristinsäure, Palmitinsäure, Stearinsäure, Pivalinsäure, Cyclohexancarbonsäure, Benzoesäure, Methylbenzoesäuren, $\alpha$-Naphthalincarbonsäure, $\beta$-Naphthalincarbonsäure, Phenylessigsäure, Ölsäure, Ricinolsäure, Linolsäure, Linolensäure, Erucasäure, Fettsäuren aus Soja, Leinsamen, Rizinus und Sonnenblume, Acrylsäure, Methacrylsäure, Versatic®-Säuren, Koch®-Säuren und Mischungen davon.

Werden als Monocarbonsäuren pE) ungesättigte Carbonsäuren oder deren Derivate eingesetzt, kann es sinnvoll sein, in Gegenwart von handelsüblichen Polymerisationsinhibitoren zu arbeiten.

Besonders bevorzugt ist die Monocarbonsäure pE) ausgewählt unter Essigsäure, Propionsäure, Benzoesäure und Mischungen davon.

In einer speziellen Ausführung enthalten die aliphatischen und die teilaromatischen Polyamide als Monocarbonsäure pE) ausschließlich Propionsäure einpolymerisiert.

In einer weiteren speziellen Ausführung enthalten die aliphatischen und die teilaromatischen Polyamide als

Monocarbonsäure pE) ausschließlich Benzoesäure einpolymerisiert.

In einer weiteren speziellen Ausführung enthalten die aliphatischen und die teilaromatischen Polyamide als Monocarbonsäure pE) ausschließlich Essigsäure einpolymerisiert.

Die aliphatischen und die teilaromatischen Polyamide können wenigstens ein Monoamin pF) einpolymerisiert enthalten. Dabei enthalten die aliphatischen Polyamide nur aliphatische Monoamine oder alicyclische Monoamine einpolymerisiert. Die Monoamine pF) dienen dabei der Endverkappung der erfindungsgemäß hergestellten Polyamide. Geeignet sind grundsätzlich alle Monoamine, die befähigt sind, unter den Reaktionsbedingungen der Polyamidkondensation mit zumindest einem Teil der zur Verfügung stehenden Carbonsäuregruppen zu reagieren. Geeignete Monoamine pF) sind aliphatische Monoamine, alicyclische Monoamine und aromatische Monoamine. Dazu zählen Methylamin, Ethylamin, Propylamin, Butylamin, Hexylamin, Heptylamin, Octylamin, Decylamin, Stearylamin, Dimethylamin, Diethylamin, Dipropylamin, Dibutylamin, Cyclohexylamin, Dicyclohexylamin, Anilin, Toluidin, Diphenylamin, Naphthylamin und Mischungen davon.

Zur Herstellung der aliphatischen und der teilaromatischen Polyamide kann zusätzlich wenigstens ein mindestens dreiwertiges Amin pG) eingesetzt werden. Hierzu gehören N'-(6-aminohexyl)hexan-1,6-diamin, N'-(12-aminododecyl)dodecan-1,12-diamin, N'-(6-aminohexyl)dodecan-1,12-diamin, N'-[3-(aminomethyl)-3,5,5-trimethyl-cyclohexyl]hexan-1,6-diamin, N'-[3-(aminomethyl)-3,5,5-trimethyl-cyclohexyl]dodecan-1,12-diamin, N'-[(5-amino-1,3,3-trimethyl-cyclohexyl)-methyl]hexan-1,6-diamin, N'-[(5-amino-1,3,3-trimethyl-cyclohexyl)methyl]dodecan-1,12-diamin, 3-[[[3-(aminomethyl)-3,5,5-trimethyl-cyclohexyl]amino]methyl]-3,5,5-trimethyl-cyclohexanamin, 3-[[(5-amino-1,3,3-trimethyl-cyclohexyl)methylamino]methyl]-3,5,5-trimethyl-cyclohexanamin, 3-(Aminomethyl)-N-[3-(aminomethyl)-3,5,5-trimethyl-cyclohexyl]-3,5,5-trimethyl-cyclohexanamin. Bevorzugt werden keine mindestens dreiwertigen Amine pG) eingesetzt.

Geeignete Lactame pH) sind ε-Caprolactam, 2-Piperidon (δ-Valerolactam), 2-Pyrrolidon (γ-Butyrolactam), Capryllactam, Önanthlactam, Lauryllactam und Mischungen davon.

Geeignete ω-Aminosäuren pI) sind 6-Aminocapronsäure, 7-Aminoheptansäure, 11-Aminoundecansäure, 12-Aminododecansäure und Mischungen davon.

Geeignete von pA) bis pI) verschiedene, damit cokondensierbare Verbindungen pK) sind wenigstens dreiwertige Carbonsäuren, Diaminocarbonsäuren, etc.

Geeignete Verbindungen pK) sind weiterhin 4-[(Z)-N-(6-Aminohexyl)-C-hydroxy-carbonimido-yl]benzoesäure, 3-[(Z)-N-(6-Aminohexyl)-C-hydroxy-carbonimidoyl]benzoesäure, (6Z)-6-(6-Ami-nohexylimino)-6-hydroxy-hexancarbonsäure, 4-[(Z)-N-[(5-Amino-1,3,3-trimethyl-cyclohexyl)-methyl]-C-hydroxy-carbonimidoyl]benzoesäure, 3-[(Z)-N-[(5-Amino-1,3,3-trimethyl-cyclohexyl)-methyl]-C-hydroxy-carbonimidoyl]benzoesäure, 4-[(Z)-N-[3-(Aminomethyl)-3,5,5-trimethyl-cyclohexyl]-C-hydroxy-carbonimidoyl]benzoesäure, 3-[(Z)-N-[3-(Aminomethyl)-3,5,5-trimethyl-cyclohexyl]-C-hydroxy-carbonimidoyl]benzoesäure und Mischungen davon.

Bevorzugt ist das Polyamid A ausgewählt unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1010, PA 1212, PA 6.T, PA 9.T, PA8.T, PA 10.T, PA 12.T, PA 6.I, PA 8.I, PA 9.I, PA 10.1, PA 12.I, PA 6.T/6, PA 6.T/10, PA 6.T/12, PA 6.T/6.I, PA 6.T/8.T, PA 6.T/9.T, PA 6.T/10T, PA 6.T/12.T, PA 12.T/6.T, PA 6.T/6.I/6, PA 6.T/6.1/12, PA 6.T/6.I/6.10, PA 6.T/6.1/6.12, PA 6.T/6.6, PA 6.T/6.10, PA 6.T/6.12, PA 10.T/6, PA 10.T/11, PA 10.T/12, PA 8.T/6.T, PA 8.T/66, PA 8.T/8.I, PA 8.T/8.6, PA 8.T/6.I, PA 10.T/6.T, PA 10.T/6.6, PA 10.T/10.I, PA 10T/10.I/6.T, PA 10.T/6.I, PA 4.T/4.I/46, PA 4.T/4.I/6.6, PA 5.T/5.I, PA 5.T/5.I/5.6, PA 5.T/5.I/6.6, PA 6.T/6.I/6.6, PA MXDA.6, PA IPDA.I, PA IPDA.T, PA MACM.I, PA MACM.T, PA PACM.I, PA PACM.T, PA MXDA.I, PA MXDA.T, PA 6.T/IPDA.T, PA 6.T/MACM.T, PA 6.T/PACM.T, PA 6.T/MXDA.T, PA 6.T/6.I/8.T/8.I, PA 6.T/6.1/10.T/10.1, PA 6.T/6.I/IPDA.T/IPDA.I, PA 6.T/6.I/MXDA.T/MXDA.I, PA 6.T/6.I/MACM.T/MACM.I, PA 6.T/6.I/PACM.T/PACM.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

In einer bevorzugten Ausführungsform enthält die erfindungsgemäße Polyamid-Zusammensetzung als Komponente A wenigstens ein aliphatisches Polyamid.

Das Polyamid ist dann vorzugsweise ausgewählt unter PA 4, PA 5, PA 6, PA 7, PA 8, PA 9, PA 10, PA 11, PA 12, PA 46, PA 66, PA 666, PA 69, PA 610, PA 612, PA 96, PA 99, PA 910, PA 912, PA 1010, PA 1212, und Copolymeren und Gemischen davon.

Besonders bevorzugt eingesetzte Polyamide sind PA 6, PA 7, PA 10, PA 11, PA 12, PA 46, PA 66, PA 6/66, PA 66/6, PA 69, PA 610, PA 612, PA 1010, PA 1012 und PA 1212.

Insbesondere ist das aliphatische Polyamid A ausgewählt unter PA 6, PA 66, PA 666 oder PA 12. Eine spezielle Ausführungsform sind Polyamid-Zusammensetzungen, bei denen die Komponente A PA 6 oder PA 66 enthält oder aus PA 6 oder PA 66 besteht.

In einer weiteren bevorzugten Ausführungsform dient das erfindungsgemäße Verfahren zur Herstellung eines teilaromatischen Polyamids.

Das Polyamid A ist dann vorzugsweise ausgewählt ist unter PA 6.T, PA 9.T, PA 10.T, PA 12.T, PA 6.I, PA 9.I, PA 10.1, PA 12.I, PA 6.T/6.I, PA 6.T/6, PA 6.T/8.T, PA 6.T/10T, PA 10.T/6.T, PA 6.T/12.T, PA12.T/6.T, PA IPDA.I, PA

IPDA.T, PA 6.T/IPDA.T, PA 6.T/6.I/IPDA.T/IPDA.I, PA 6.T/10.T/IPDA.T, PA 6.T/12.T/IPDA.T, PA 6.T/10.T/PACM.T, PA 6.T/12.T/PACM.T, PA 10.T/IPDA.T, PA 12.T/IPDA.T und Copolymeren und Gemischen davon.

Die folgenden Angaben des zahlenmittleren Molekulargewichts $M_n$ und des gewichtsmittleren Molekulargewichts $M_w$ im Rahmen dieser Erfindung beziehen sich auf eine Bestimmung mittels Gelpermeationschromatographie (GPC). Zur Kalibrierung wurde beispielsweise PMMA als Polymerstandard mit einer niedrigen Polydispersität eingesetzt.

Das synthetische Polyamid A weist vorzugsweise ein zahlenmittleres Molekulargewicht $M_n$ in einem Bereich von 8000 bis 50000 g/mol, besonders bevorzugt von 10000 bis 35000 g/mol auf.

Das synthetische Polyamid A weist vorzugsweise ein gewichtsmittleres Molekulargewicht $M_n$ in einem Bereich von 15000 bis 200000 g/mol, besonders bevorzugt von 20000 bis 125000 g/mol auf.

Die Polyamide A weisen vorzugsweise eine Polydispersität PD (= $M_w/M_n$) von höchstens 6, besonders bevorzugt von höchstens 5, insbesondere von höchstens 3,5, auf.

Es können auch Copolymere eingesetzt werden, beispielsweise PA 6/66 oder PA 66/6, wie auch PA 66/610.

In den Copolyamiden können die Anteile der Comonomere im Bereich von 5 : 95 bis 95 : 5, vorzugsweise 90 : 10 bis 10 : 90 gewählt werden.

Erfindungsgemäß besonders bevorzugt wird als teilkristallines Polyamid Polyamid-6 oder Polyamid-66 eingesetzt.

Die Komponente A liegt vorzugsweise in einer Menge von mindestens 60 Gew.-%, besonders bevorzugt mindestens 80 Gew.-%, insbesondere mindestens 90 Gew.-% vor.

Der Anteil des (vorzugsweise teilkristallinen) Polyamids als Komponente A in den Formmassen beträgt vorzugsweise 60 bis 99,89 Gew.-%, besonders bevorzugt 80 bis 99,89 Gew.-%, insbesondere 90 bis 99,89 Gew.-%. Damit ist der Hauptteil der Formmassen aus Polyamid oder Polyamiden der Komponente A zusammengesetzt.

Als Komponente B enthalten die Formmassen 0,1 bis 2 Gew.-%, vorzugsweise 0,2 bis 1,7 Gew.-%, insbesondere 0,5 bis 1,5 Gew.-% mindestens einer Verbindung der allgemeinen Formel (I). Diese Verbindung kann wie in WO 2013/139802 aufgebaut sein. Auch Verfahren zu ihrer Herstellung sind dort und in DE 2710595 beschrieben, wie auch in Journal für praktische Chemie (1915), Vol. 91, Seiten 1 bis 38 und Chem. Eur. J. 1997, 3, Seiten 1238 bis 1243.

Bevorzugte Verbindungen der allgemeinen Formel (I) sind in WO 2013/139802 beschrieben, insbesondere auf den Seiten 11 bis 14.

Dabei hat x vorzugsweise den Wert 1 oder 2, insbesondere 1.

Bevorzugt sind Verbindungen der allgemeinen Formel (I),

- wobei $R^1$ und $R^2$ unabhängig voneinander aus linearem $C_1$-$C_7$-Alkyl, verzweigtem $C_3$-$C_{10}$-Alkyl, unsubstituiertem oder substituiertem $C_3$-$C_{12}$-Cycloalkyl, unsubstituiertem oder substituiertem $C_3$-$C_{12}$-Cycloalkyl-$C_1$-$C_4$-alkyl, unsubstituiertem oder substituiertem Aryl und unsubstituiertem oder substituiertem Aryl-$C_1$-$C_4$-alkyl ausgewählt sind;
- wobei $R^1$ und $R^2$ unabhängig voneinander aus Wasserstoff, verzweigtem $C_3$-$C_{10}$-Alkyl, $C_5$-$C_{12}$-Cycloalkyl, $C_5$-$C_{12}$-Cycloalkyl-$C_1$-$C_4$-alkyl, Phenyl und Phenyl-$C_1$-$C_4$-alkyl ausgewählt sind, wobei jeder Ring in den vier letztgenannten Resten unsubstituiert oder durch einen oder mehrere gleiche oder verschiedene Reste $R^a$ substituiert ist, wobei $R^a$ aus $C_1$-$C_{10}$-Alkyl oder Halogen ausgewählt ist;
- wobei $R^1$ und $R^2$ unabhängig voneinander aus verzweigtem $C_3$-$C_{10}$-Alkyl, das über ein sekundäres oder tertiäres Kohlenstoffatom der Alkylgruppe an das Grundgerüst gebunden ist, $C_5$-$C_{10}$-Cycloalkyl, das unsubstituiert oder durch 1 oder 2 Reste $R^a$ substituiert ist, und Phenyl, das unsubstituiert oder durch 1 oder 2 Reste $R^a$ substituiert ist, ausgewählt sind.

Gemäß einer Ausführungsform der Erfindung können $R^1$ und $R^2$ die gleiche Bedeutung besitzen.

Es ist bevorzugt, dass Z für $C_5$-$C_8$-Alkandiyl, $C_5$-$C_7$-CyCloalkylen, $C_5$-$C_7$-Cycloalkylen-$CH_2$-$C_5$-$C_7$-cyclo-alkylen, Phenylen oder Phenylen-$CH_2$-phenylen steht, wobei jeder Ring in den vier letztgenannten Resten unsubstituiert oder durch einen oder zwei gleiche oder verschiedene Reste $R^b$ substituiert ist, wobei $R^b$ aus $C_1$-$C_{10}$-Alkyl oder Halogen ausgewählt ist.

Besonders bevorzugt steht Z für lineares $C_{5\text{-}8}$-Alkandiyl oder $C_{5\text{-}7}$Cycloalkylen.

Speziell bevorzugt steht Z für trans-1,4-Cyclohexylen.

Bevorzugt sind Verbindungen der allgemeinen Formel (I), wobei $R^1$ und $R^2$ gleich sind und aus Wasserstoff, tert.-Butyl, 1,1-Dimethylpropyl, 1,5-Dimethylhexyl, 1,1,3,3-Tetramethylbutyl und 1-Adamantyl ausgewählt sind; Z für trans-1,4-Cyclohexylen steht und x für 1 steht.

Besonders bevorzugt sind in der Formel (I) $R^1$ und $R^2$ identisch und ausgewählt aus Wasserstoff, tert.-Butyl, 1,1-Dimethylpropyl, 1,5-Dimethylhexyl, 1,1,3,3-Tetramethylbutyl und 1-Adamantyl. Z ist dabei vorzugsweise 1,4-Cyclohexylen (trans-1,4-Cyclohexandyl). x hat vorzugsweise den Wert 1.

Speziell bevorzugt sind $R^1$ und $R^2$ Wasserstoff, Z ist trans-1,4-Cyclohexylen (trans-1,4-Cyclohexandyl), und x hat den Wert 1.

Diese Verbindungen sind insbesondere bevorzugt in Kombination mit einem Polyamid, ausgewählt aus PA 6,

PA 11, PA 12, PA 66, PA 610, PA 66/6 und PA 6/66.

Die Herstellung der Verbindungen der allgemeinen Formel (I) kann wie in WO 2013/139802 beschrieben erfolgen.

Als Komponente C wird mindestens ein Farbmittel, ausgewählt aus Anthrachinon-Farbmitteln, Benzimidazolon-Farbmitteln und Perinon-Farbmitteln, eingesetzt. Dabei handelt es sich vorzugsweise bei den Farbmitteln um Farbstoffe, Pigmente oder deren Gemische.

Das Farbmittel wird erfindungsgemäß in einer Menge von 10 bis 1000 ppm, vorzugsweise 20 bis 500 ppm, insbesondere 50 bis 200 ppm eingesetzt, bezogen auf die gesamte Formmasse.

Das Gewichtsverhältnis der Komponente C zur Komponente B beträgt vorzugsweise 1 : 1 bis 1 : 1000, besonders bevorzugt 1 : 5 bis 1 : 700, insbesondere 1 : 10 bis 1 : 500, speziell 1 : 25 bis 1 : 300.

Anthrachinon-Farbmittel sind Anthrachinon-Farbstoffe oder Anthrachinon-Pigmente, die eine Anthrachinon-Einheit oder eine von Anthrachinon abgeleitete Einheit in ihrem Grundgerüst aufweisen. Anthrachinon wird auch als 9,10-Anthrachinon oder 9,10-Dihydro-anthracen-9,10-dion bezeichnet.

Die Anthrachinon-Grundstruktur kann auch substituiert sein, beispielsweise durch Alkyl, Aryl, Aralkyl, Alkaryl, -OH, $-NH_2$, $-SO_3H$, $-NO_2$. Auch eine Gruppe C = O kann substituiert sein zur Herstellung eines Anthrachinonderivats.

Die Anthrachinon-Farbmittel können zusätzlich zum Anthrachinon-Rest mindestens einen weiteren aromatischen Kern in ihrer Struktur enthalten.

Geeignete Anthrachinon-Farbstoffe sind dem Fachmann bekannt. Beispiele geeigneter Anthrachinon-Farbstoffe sind Solvent Red 52, Solvent Blue 132 und Solvent Green 3.

Benzimidazolon-Farbmittel sind Benzimidazolon-Farbstoffe oder Benzimidazolon-Pigmente. Sie weisen vorzugsweise eine Benzimidazolon-Struktur in ihrem Grundgerüst auf. Benzimidazolon wird auch als 2-Hydroxybenzimidazol, 2(1H-)Benzimidazolon oder 1,3-Dihydro-2H-benzimidazol-2-on bezeichnet. Die Grundstruktur von Benzimidazolon ist beispielsweise Teil der Benzimidazolon-Pigmente. Benzimidazolon-Farbmittel sind an sich bekannt. Die Farbmittel können gegebenenfalls eine Azogruppe als Strukturelement enthalten. Sie können neben den vorstehend genannten Substituenten oder alternativ mindestens einen weiteren aromatischen Kern in ihrer Struktur enthalten.

Perinon-Farbmittel sind Perinon-Farbstoffe oder Perinon-Pigmente, die ein von Perinon abgeleitetes Grundgerüst aufweisen.

Die Perinon-Struktur wird auch als trans-Perinon, Bisbenzimidazo(2,1-b:2',1'-i)benzo[lmn](3,8) phenanthrolin-8,17-dion bezeichnet. Es ist auch möglich, dass die Perinon-Farbmittel nur eine Benzimidazol-Struktur aufweisen. Ein derartiges Beispiel ist Solvent Red 179.

Auch die Perinon-Farbstoffe können mit den vorstehend genannten Substituenten substituiert sein und mindestens einen weiteren aromatischen Kern in ihrer Struktur enthalten. Bevorzugt sind damit Farbstoffe oder Pigmente, die mindestens eine Anthrachinon-Einheit, mindestens eine Benzimidazolon-Einheit oder mindestens eine Perinon-Struktureinheit im Grundgerüst aufweisen.

Weiterhin ist es auch möglich, den Farbstoff Amaplast OR GXP von ColorChem International Corp., USA, als Farbmittel in den erfindungsgemäßen Formmassen einzusetzen.

Gemäß einer Ausführungsform enthalten die Anthrachinon-, Benzimidazolon- und Perinon-Farbmittel keine Perylen-, Naphthalimid- oder Benzanthron-Strukturen.

Es handelt sich vorzugsweise auch nicht um Chromatkomplexe.

Es wurde erfindungsgemäß gefunden, dass der Einsatz geringer Mengen dieser Farbmittel die optischen Eigenschaften von Polyamiden verbessert, obwohl sie Licht absorbieren und so die Gesamttransmission verringern. In Kombination mit den Verbindungen der allgemeinen Formel (I) führen sie zu einer verringerten Trübung und damit zu einer erhöhten Transparenz.

Die erfindungsgemäßen Formmassen können auch weitere Inhaltsstoffe enthalten, beispielsweise in einer Menge von 0 bis 39,89 Gew.-%, besonders bevorzugt 0 bis 19,89 Gew.-%, insbesondere 0 bis 9,89 Gew.-%. Zusammen mit den vorstehend angegebenen Mengen der Komponente A und den Komponenten B und C ergeben sich damit 100 Gew.-% für die gesamte Formmasse.

Wenn weitere Inhaltsstoffe vorhanden sind, beträgt die Mindestmenge vorzugsweise 0,001 Gew.-%, besonders bevorzugt 0,01 Gew.-%, insbesondere 0,1 Gew.-%.

Damit ergeben sich Mengenanteile von 0,001 bis 39,89 Gew.-%, vorzugsweise 0,01 bis 19,89 Gew.-%, insbesondere 0,1 bis 9,89 Gew.-%. Die Obergrenze für die Komponente A vermindert sich um den Mindestgehalt der weiteren Inhaltsstoffe, sofern diese vorliegen.

Als weitere Inhaltsstoffe (Komponente D) können beispielsweise Glasfasern oder Füll- und Verstärkungsstoffe mitverwendet werden.

Der Begriff "Füllstoff und Verstärkungsstoff" (= mögliche Komponente D) wird im Rahmen der Erfindung breit verstanden und umfasst partikulare Füllstoffe, Faserstoffe und beliebige Übergangsformen. Partikuläre Füllstoffe können eine weite Bandbreite von Teilchengrößen aufweisen, die von staubförmigen bis grobkörnigen Partikeln reichen. Als Füllmaterial kommen organische oder anorganische Füll- und Verstärkungsstoffe in Frage. Beispielsweise können anorganische Füllstoffe, wie Kaolin, Kreide, Wollastonit, Talkum, Calciumcarbonat, Silikate, Titandioxid, Zinkoxid, Graphit, Glaspartikel, z. B. Glaskugeln, nanoskalige Füllstoffe, wie Kohlenstoff-Nanoröhren (carbon nanotubes), nanoskalige Schichtsilikate, nanoskaliges Aluminiumoxid ($Al_2O_3$), nanoskaliges Titandioxid ($TiO_2$), Graphen, dauerhaft magnetische bzw. magnetisierbare Metallverbindungen und/oder Legierungen, Schichtsilikate und nanoskaliges Siliciumdioxid ($SiO_2$), eingesetzt werden. Die Füllstoffe können auch oberflächenbehandelt sein.

Als Schichtsilikate können in den erfindungsgemäßen Formmassen z. B. Kaoline, Serpentine, Talkum, Glimmer, Vermiculite, Illite, Smectite, Montmorillonit, Hectorit, Doppelhydroxide oder Gemische davon eingesetzt werden. Die Schichtsilikate können oberflächenbehandelt oder unbehandelt sein.

Weiterhin können ein oder mehrere Faserstoffe zum Einsatz kommen. Diese sind vorzugsweise ausgewählt aus bekannten anorganischen Verstärkungsfasern, wie Borfasern, Kohlenstofffasern, Kieselsäurefasern, Keramikfasern und Basaltfasern; organischen Verstärkungsfasern, wie Aramidfasern, Polyesterfasern, Nylonfasern, Polyethylenfasern und Naturfasern, wie Holzfasern, Flachsfasern, Hanffasern und Sisalfasern.

Insbesondere bevorzugt wird auf den Einsatz von Glasfasern, Füll- und Verstärkungsstoffen verzichtet, da sie die optischen Eigenschaften der Formmassen beeinträchtigen können.

Daneben ist auch der Einsatz von optischen Streumitteln für das Erzielen einer homogen diffusen Streuung bei geringer Farbveränderung des transmittierten Lichtes möglich. Beispielsweise können Emulsionspolymerisate von Polyacrylaten oder Styrol(co)polymeren verwendet werden.

Zusätzlich zum Polyamid können weitere Polymere mitverwendet werden.

Die von Komponente A verschiedenen thermoplastischen Polymere sind vorzugsweise ausgewählt unter

- Homo- oder Copolymeren, die in einpolymerisierter Form wenigstens ein Monomer enthalten, das ausgewählt ist unter $C_2$-$C_{10}$ Monoolefinen, wie beispielsweise Ethylen oder Propylen, 1,3-Butadien, 2-Chlor-1,3-Butadien, Vinylalkohol und dessen $C_2$-$C_{10}$-Alkylestern, Vinylchlorid, Vinylidenchlorid, Vinylidenfluorid, Tetrafluorethylen, Glycidylacrylat, Glycidylmethacrylat, Acrylaten und Methacrylaten mit Alkoholkomponenten von verzweigten und unverzweigten $C_1$-$C_{10}$-Alkoholen, Vinylaromaten, wie beispielsweise Styrol, Acrylnitril, Methacrylnitril, $\alpha$,$\beta$-ethylenisch ungesättigten Mono- und Dicarbonsäuren, und Maleinsäureanhydrid,
- Homo- und Copolymeren von Vinylacetalen,
- Polyvinylestern,
- Polycarbonaten (PC),
- Polyestern, wie Polyalkylenterephthalaten, Polyhydroxyalkanoaten (PHA), Polybutylensuccinaten (PBS), Polybutylensuccinatadipaten (PBSA),
- Polyethern,
- Polyetherketonen,
- thermoplastischen Polyurethanen (TPU),
- Polysulfiden,
- Polysulfonen,
- Polyethersulfonen,
- Cellulosealkylestern

und Mischungen davon.

Zu nennen sind beispielsweise Polyacrylate mit gleichen oder verschiedenen Alkoholresten aus der Gruppe der $C_4$-$C_8$-Alkohole, besonders des Butanols, Hexanols, Octanols und 2-Ethylhexanols, Polymethylmethacrylat (PMMA), Methylmethacrylat-Butylacrylat-Copolymere, AcrylnitrilButadien-Styrol-Copolymere (ABS), Ethylen-Propylen-Copolymere, Ethylen-Propylen-Dien-Copolymere (EPDM), Polystyrol (PS), Styrol-Acrylnitril-Copolymere (SAN), Acrylnitril-Styrol-Acrylat (ASA), Styrol-Butadien-Methylmethacrylat-Copolymere (SBMMA), Styrol-Maleinsäureanhydrid-Copolymere, Styrol-Methacrylsäure-Copolymere (SMA), Polyoxymethylen (POM), Polyvinylalko-hol (PVAL), Polyvinylacetat (PVA), Polyvinylbutyral (PVB), Polycaprolacton (PCL), Polyhydroxy-buttersäure (PHB), Polyhydroxyvaleriansäure (PHV), Polymilchsäure (PLA), Ethylcellulose (EC), Celluloseacetat (CA), Cellulosepropionat (CP) oder Cellulose-Acetat/Butyrat (CAB).

Bevorzugt handelt es sich bei dem in der erfindungsgemäßen Formmasse enthaltenen wenigstens einem thermoplastischen Polymer um Polyvinylchlorid (PVC), Polyvinylbutyral (PVB), Homo- und Copolymere von Vinylacetat, Homo- und Copolymere von Styrol, Polyacrylate, thermoplastische Polyurethane (TPU) oder Polysulfide.

Geeignete bevorzugte Additive D sind Schmiermittel wie N,N'-Ethylenbis(stearamid) und Wärmestabilisatoren, aber auch Flammschutzmittel, Lichtschutzmittel (UV-Stabilisatoren, UV-Absorber oder UV-Blocker), Nukleierungsmittel, Antistatika, Leitfähigkeitsadditive, Entformungsmittel, optische Aufheller, Entschäumer etc.

Als Komponente D können die erfindungsgemäßen Formmassen vorzugsweise 0,01 bis 3 Gew.-%, besonders bevorzugt 0,02 bis 2 Gew.-%, insbesondere 0,05 bis 1,0 Gew.-% mindestens eines Wärmestabilisators, bezogen auf das Gesamtgewichts Zusammensetzung, enthalten.

Bevorzugt sind die Wärmestabilisatoren ausgewählt unter Kupferverbindungen, sekundären aromatischen Aminen, sterisch gehinderten Phenolen, Phosphiten, Phosphoniten und Mischungen davon.

Sofern eine Kupferverbindung verwendet wird, beträgt vorzugsweise die Menge an Kupfer 0,003 bis 0,5 Gew.-%, insbesondere 0,005 bis 0,3 Gew.-% und besonders bevorzugt 0,01 bis 0,2 Gew.-%, bezogen auf das Gesamtgewicht der Zusammensetzung.

Sofern Stabilisatoren auf Basis sekundärer aromatischer Amine verwendet werden, beträgt die Menge an diesen Stabilisatoren vorzugsweise 0,2 bis 2 Gew.-%, besonders bevorzugt 0,2 bis 1,5 Gew.-%, bezogen auf das Gesamtgewicht der Zusammensetzung.

Sofern Stabilisatoren auf Basis sterisch gehinderter Phenole verwendet wird, beträgt die Menge an diesen Stabilisatoren vorzugsweise 0,1 bis 1,5 Gew.-%, besonders bevorzugt 0,2 bis 1 Gew.-%, bezogen auf das Gesamtgewicht der Zusammensetzung.

Sofern Stabilisatoren auf Basis von Phosphiten und/oder Phosphoniten verwendet werden, beträgt die Menge an diesen Stabilisatoren vorzugsweise 0,1 bis 1,5 Gew.-%, besonders bevorzugt von 0,2 bis 1 Gew.-%, bezogen auf das Gesamtgewicht der der Zusammensetzung.

Geeignete Verbindungen D des ein- oder zweiwertigen Kupfers sind z. B. Salze des ein- oder zweiwertigen Kupfers mit anorganischen oder organischen Säuren oder ein- oder zweiwertigen Phenolen, die Oxide des ein- oder zweiwertigen Kupfers oder die Komplexverbindungen von Kupfersalzen mit Ammoniak, Aminen, Amiden, Lactamen, Cyaniden oder Phosphinen, bevorzugt Cu(I)- oder Cu(II)-Salze der Halogenwasserstoffsäuren, der Cyanwasserstoffsäuren oder die Kupfersalze der aliphatischen Carbonsäuren. Besonders bevorzugt sind die einwertigen Kupferverbindungen CuCl, CuBr, Cul, CuCN und $CU_2O$ sowie die zweiwertigen Kupferverbindungen $CuCl_2$, $CUSO_4$, CuO, Kupfer(II)acetat oder Kupfer(II)stearat.

Die Kupferverbindungen sind handelsüblich bzw. ihre Herstellung ist dem Fachmann bekannt. Die Kupferverbindung kann als solche oder in Form von Konzentraten eingesetzt werden. Unter Konzentrat ist dabei ein Polymer, vorzugsweise von gleicher chemischer Natur wie die Komponente A zu verstehen, welches das Kupfersalz in hoher Konzentration enthält. Der Einsatz von Konzentraten ist ein übliches Verfahren und wird besonders häufig dann angewandt, wenn sehr geringe Mengen eines Einsatzstoffes zu dosieren sind. Vorteilhafterweise werden die Kupferverbindungen in Kombination mit weiteren Metallhalogeniden, insbesondere Alkalihalogeniden, wie Nal, KI, NaBr, KBr, eingesetzt, wobei das molare Verhältnis von Metallhalogenid zu Kupferhalogenid 0,5 bis 20, bevorzugt 1 bis 10 und besonders bevorzugt 3 bis 7, beträgt.

Besonders bevorzugte Beispiele für erfindungsgemäß einsetzbare Stabilisatoren auf Basis sekundärer aromatischer Amine sind Addukte aus Phenylendiamin mit Aceton (Naugard® A), Addukte aus Phenylendiamin mit Linolensäure, 4,4'-Bis($\alpha$,$\alpha$-dimethylbenzyl)diphenylamin (Naugard® 445), N,N'-Dinaphthyl-p-phenylendiamin, N-Phenyl-N'-cyclohexyl-p-phenylendiamin oder Mischungen von zwei oder mehreren davon.

Bevorzugte Beispiele für erfindungsgemäß einsetzbare Stabilisatoren auf Basis sterisch gehinderter Phenole sind N,N'-Hexamethylen-bis-3-(3,5-di-tert-butyl-4-hydroxyphenyl)-propionamid, Bis-(3,3-bis-(4'-hydroxy-3'-tert-butylphenyl)-butansäure)-glykolester, 2,1'-Thioethylbis-(3-(3,5-di.tert-butyl-4-hydroxyphenyl)-propionat, 4,4'-Butylidenbis-(3-methyl-6-tert.-butylphenol), Triethylenglykol-3-(3-tert-butyl-4-hydroxy-5-methylphenyl)-propionat oder Mischungen von zweien oder mehreren dieser Stabilisatoren.

Bevorzugte Phosphite und Phosphonite sind Triphenylphosphit, Diphenylalkylphosphit, Phenyldialkylphosphit, Tris(nonylphenyl)phosphit, Trilaurylphosphit, Trioctadecylphosphit, Distearylpentaerythritoldiphosphit, Tris(2,4-di-tert-butylphenyl)phosphit, Diisodecylpentaerythritoldiphosphit, Bis(2,4-di-tert-butylphenyl)pentaerythritoldiphosphit, Bis(2,6-di-tert-butyl-4-methylphenyl)-pentaerythritoldiphosphit, Diisodecyloxypentaerythritoldiphosphit, Bis(2,4-di-tert-butyl-6-methylphenyl)pentaerythritoldiphosphit, Bis(2,4,6-tris-(tert-butylphenyl))pentaerythritoldiphosphit, Tristearylsorbitoltriphosphit, Tetrakis-(2,4-di-tert-butylphenyl)-4,4'-biphenylendiphosphonit, 6-Isooctyloxy-2,4,8,10-tetra-tert-butyl-12H-dibenz-[d,g]-1,3,2-dioxaphosphocin, 6-Fluoro-2,4,8,10-tetra-tert-butyl-12-methyl-dibenz[d,g]-1,3,2-dioxaphosphocin, Bis(2,4-di-tert-butyl-6-methylphenyl)methylphosphit und Bis(2,4-di-tert-butyl-6-methylphenyl)ethylphosphit. Insbesondere werden bevorzugt Tris[2-tert-butyl-4-thio(2'-methyl-4'-hydroxy-5'-tert-butyl)-phenyl-5-methyl]phenyl-phosphit und Tris(2,4-di-tert-butylphenyl)phosphit (Irgafos® 168: Handelsprodukt der Firma BASF SE).

Die erfindungsgemäßen Formmassen können 0 bis 15 Gew.-%, besonders bevorzugt 0 bis 10 Gew.-%, bezogen auf das Gesamtgewicht der Zusammensetzung, mindestens eines Flammschutzmittels als Additiv D enthalten. Wenn die erfindungsgemäßen Formmassen mindestens ein Flammschutzmittel enthalten, so vorzugsweise in einer Menge von 0,01 bis 15 Gew.-%, besonders bevorzugt von 0,1 bis 10 Gew.-%, bezogen auf das Gesamtgewicht der Zusammensetzung. Als Flammschutzmittel kommen halogenhaltige und halogenfreie Flammschutzmittel und deren Synergisten in Frage (siehe auch Gächter/Müller, 3. Ausgabe, 1989, Hanser Verlag, Kapitel 11). Bevorzugte halogenfreie Flammschutzmittel sind roter Phosphor, Phosphinsäure- oder Diphosphinsäuresalze , und/oder stickstoffhaltige Flammschutzmittel wie Melamin, Melamincyanurat, Melaminsulfat, Melaminborat, Melaminoxalat, Melaminphosphat (prim., sec.) oder sec. Melaminpyrophosphat, Neopentylglycolborsäuremelamin, Guanidin und dem Fachmann bekannte Derivate davon, sowie polymeres Melaminphosphat (CAS Nr.: 56386-64-2 bzw. 218768-84-4 sowie EP-A-1 095 030),

Ammoniumpolyphosphat, Trishydroxyethylisocyanurat (gegebenenfalls auch Ammoniumpolyphosphat in Mischung mit Trishydroxyethylisocyanurat) (EP-A-058 456 7). Weitere N-haltige oder P-haltige Flammschutzmittel oder als Flammschutzmittel geeignete PN-Kondensate können der DE-A-10 2004 049 342 entnommen werden, ebenso die hierfür üblichen Synergisten wie Oxide oder Borate. Geeignete halogenhaltige Flammschutzmittel sind z. B. oligomere bromierte Polycarbonate (BC 52 Great Lakes) oder Polypentabrombenzylacrylate mit N größer 4 (FR 1025 Dead sea bromine), Umsetzungsprodukte aus Tetrabrom-bis-phenol-A mit Epoxiden, bromierte oligomere oder polymere Styrole, Dechloran, welche meist mit Antimonoxiden als Synergisten eingesetzt werden (für Einzelheiten und weitere Flammschutzmittel: siehe DE-A-10 2004 050 025).

In den erfindungsgemäßen Formmassen beträgt die Summe der Inhaltsstoffe 100 Gew.-%. Die Mengen der einzelnen Komponenten werden daher so kombiniert, dass sich eine Gesamtmenge von 100 Gew.-% ergibt.

Die Herstellung der Polyamid-Formmassen erfolgt nach an sich bekannten Verfahren. Dazu zählt das Mischen der Komponenten in den entsprechenden Gewichtsanteilen. Vorzugsweise geschieht das Mischen der Komponenten bei erhöhten Temperaturen durch gemeinsames Vermengen, Vermischen, Kneten, Extrudieren oder Verwalzen. Die Temperatur beim Mischen liegt vorzugsweise in einem Bereich von 220 °C bis 340 °C, besonders bevorzugt von 240 bis 320 °C und speziell von 250 bis 300 °C. Dem Fachmann sind die geeigneten Verfahren bekannt.

Insbesondere die Farbmittel der Komponente C können in Form eines Masterbatches eingesetzt werden. Dazu wird vorzugsweise das Farbmittel der Komponente C im Polyamid der Komponente A zu einem Masterbatch mit einem Farbmittelgehalt im Bereich von 0,1 bis 10 Gew.-%, vorzugsweise 0,2 bis 5 Gew.-% eingearbeitet.

Auch die Verbindung der allgemeinen Formel (I) kann in Form eines Masterbatches in Polyamid der Komponente A eingesetzt werden.

Es ist jedoch auch möglich, die Verbindung der allgemeinen Formel (I) mit der Komponente A und dem die Komponente C enthaltenden Masterbatch zu vermischen.

Die erfindungsgemäßen Formmassen und die daraus hergestellten Formkörper, Fasern und Folien zeigen eine erhöhte Transparenz und sind damit visuell ansprechend. Sie sind damit insbesondere geeignet zur Herstellung von Verpackungsmaterialien, Beleuchtungselementen und Bauteilen, bei denen es darauf ankommt, durch das Material der Formmasse hindurchsehen zu können. Je nach Wandstärke der entsprechenden Behältnisse können die Mengen der Komponenten B und C angepasst werden, um eine geeignete Transparenz zu erreichen.

Die Erfindung wird durch die nachstehenden Beispiele näher erläutert.

Beispiele

Es wurden folgende Komponenten verwendet:
Komponente A:
Polyamid 6 (PA 6) mit einer Viskositätszahl VZ von 150 ml/g, gemessen als 0,5 gew.-%ige Lösung in 96 gew.-%iger Schwefelsäure bei 25 °C nach ISO 307. Es wurde Ultramid® B27 der BASF SE verwendet.
Komponente B:

(4-Ureidocyclohexyl)harnstoff
Die Synthese der Komponente B ist in WO 2013/139802 beschrieben.

Komponente C:

| Komponente | Handelsname | Klasse | Pigment- / Farbstoff-Index-Nr. | CAS-Nr. | Name |
|---|---|---|---|---|---|
| C1 | Macrolex Rot 5B | Anthrachinon | Solvent Red 52 | 81-39-0 | 3-methyl-6-[(4-methylphenyl) amino]-3H-Dibenz[f,ij] isoquinolin-2,7-dion |
| C2 | Oracet Blue 700 FA | Anthrachinon | Solvent Blue 132 | 110157-96-5 | exakte Struktur nicht offengelegt |
| C3 | Macrolex Grün 5B | Anthrachinon | Solvent Green 3 | 128-80-3 | 1,4-bis(4-methylanilino) anthracen-9,10-dion |

(fortgesetzt)

| Komponente | Handelsname | Klasse | Pigment- / Farbstoff-Index-Nr. | CAS-Nr. | Name |
|---|---|---|---|---|---|
| C4 | PV-Echtorange 6RL | Benzimidazo-Ion | Pigment Orange 68 | 42844-93-9 | [1,3-dihydro-5,6-bis[[(2-hydroxy-1-naphthyl) methylen]amino]-2H-benzimidazol-2-onato (2-)-N5,N6,O5,PO6]nickel |
| C5 | Macrolex Rot E2G | Perinon | Solvent Red 179 | 89106-94-5 | 14H-Benz[4,5]isoquino[2,1-a] perimidin-14-on |
| CV1 | Oracet YW 160 | Monoazo, Chromatkomplex | Solvent Yellow 21 | 5601-29-6 | Hydrogen bis[2-[(4,5-dihydro-3-methyl-5-oxo-1-phenyl-1H-pyrazol-4-yl)azo]benzoato] chromat |
| CV2 | Keyplast FL Yellow Green 7G | Perylen | Solvent Green 5 | 79869-59-3 | Isobutyl 5-(4-isobutoxycarbonyl-1-naphthyl)-4-methyl-naphthalen-1-carboxylat |
| CV3 | Hostasol Gelb 3G | Naphthalimid (Aminoketon) | Solvent Yellow 98 | 12671-74-8 27870-92-4 | 1H-Thioxantheno[2,1,9-def] isoquinolin-1,3(2H)-dion, 2-octadecyl- |
| CV4 | Hostasol Rot GG | Benzanthron | Solvent Orange 63 | 16294-75-0 | 14H-Anthra[2,1,9-mna] thioxanthen-14-on |

Strukturformeln:

| | |
|---|---|
| B | 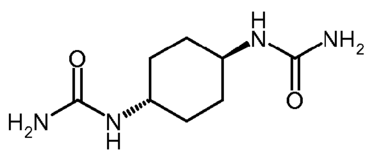 |
| C1 | 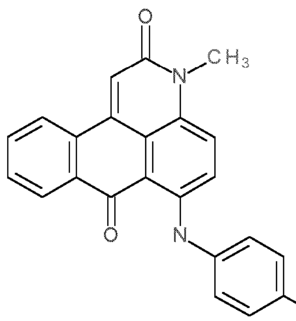 |
| C2 | exakte Struktur nicht offengelegt |

(fortgesetzt)

| | |
|---|---|
| C3 | 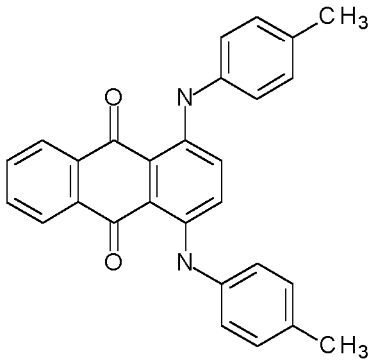 |
| C4 | 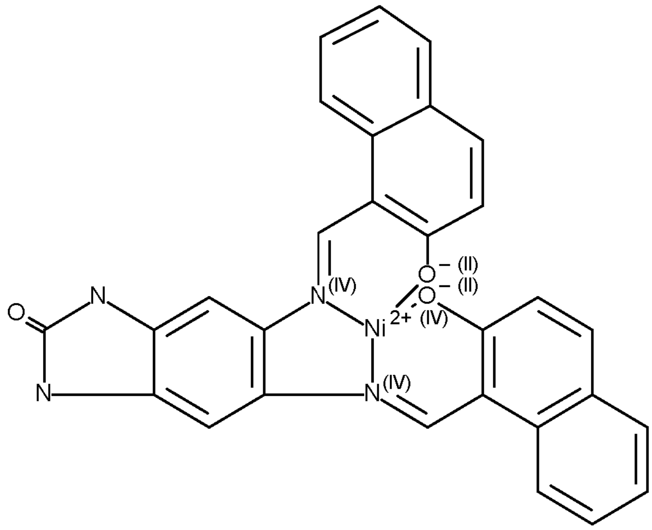 |
| C5 | 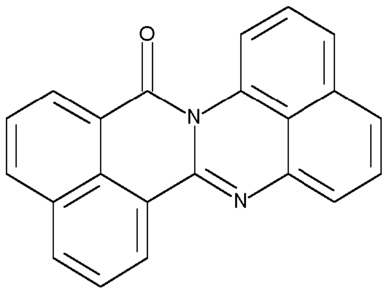 |

(fortgesetzt)

| | |
|---|---|
| CV1 | 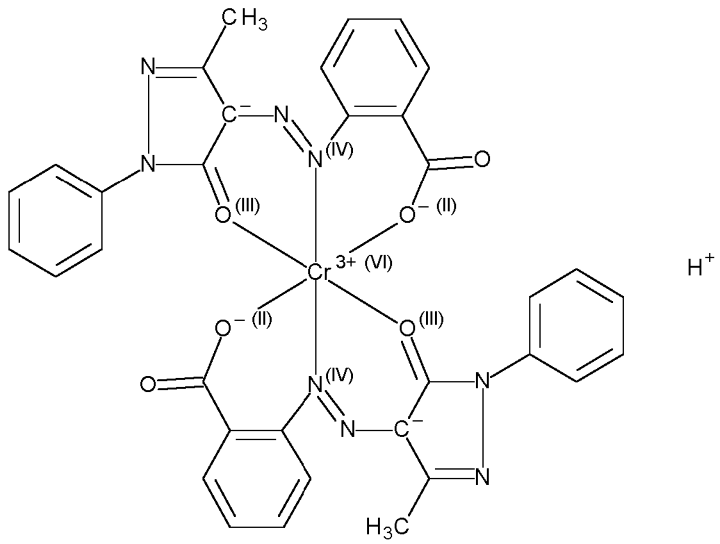 |
| CV2 | 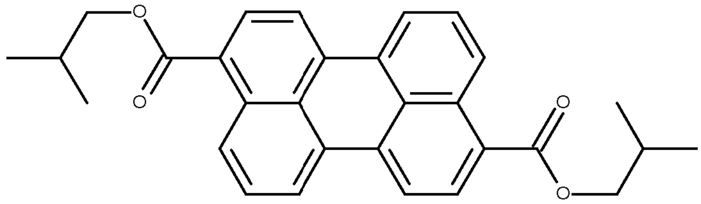 |
| CV3 | 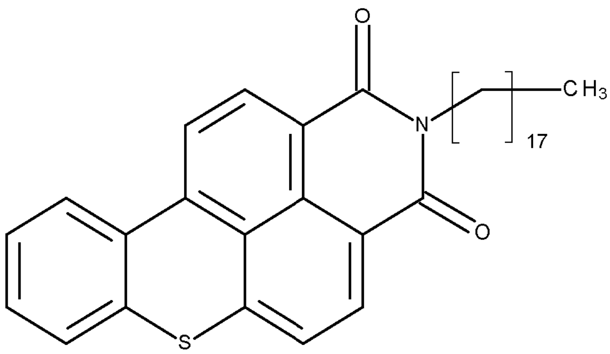 |
| CV4 | 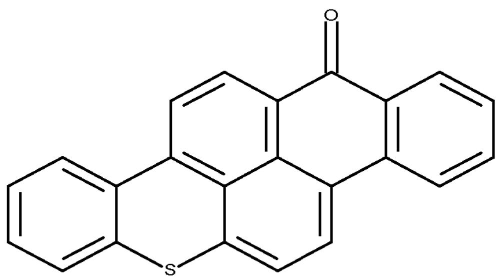 |

Verarbeitung:

Herstellung von PA 6-Zusammensetzung (AB)
99,0 Gew.-% Ultramid B27 wurden mit 1,0 Gew.-% von Verbindung B in einem konischen Doppelschneckenextruder (DSM Xplore, 15cc) unter Stickstoff compoundiert. Das reine Polyamid, d. h. ohne Zusatz der Komponente B, wurde auf die gleiche Weise verarbeitet, um eine Referenzprobe zu erhalten. Es wurden folgende Parameter verwendet:

Verweilzeit: 3 min

Gehäusetemperatur: 260 °C
Schmelzetemperatur: 240 °C bis 245 °C
Drehzahl: 100 Upm

Masterbatchherstellung durch Compoundierung (MB1-MB9):
Um eine bessere Verteilung der Farbstoffe im Polymer zu erreichen, wurde zuerst von jedem Farbmittel (Komponente C1-C5 bzw. CV1-CV4) ein Masterbatch in Ultramid B27 hergestellt, mit einer Farbstoffkonzentration von 2,94 Gew.-%. Hierzu wurde das Polyamidgranulat mit dem jeweiligen Farbmittel in einem konischen Doppelschneckenextruder (DSM Xplore, 15cc) unter Stickstoff compoundiert. Das reine Polyamid, d. h. ohne Zusatz der Komponente C, wurde auf die gleiche Weise verarbeitet, um eine Referenzprobe zu erhalten. Es wurden folgende Parameter verwendet:

Verweilzeit: 3 min
Gehäusetemperatur: 260 °C
Schmelzetemperatur: 240 °C bis 245 °C
Drehzahl: 100 Upm

Herstellung der Versuchsbeispiele:
Zur Herstellung der Versuchsbeispiele wurde das Polyamidgranulat bzw. die Polyamid-Zusammensetzung AB mit den jeweiligen Farbmasterbatchen (MB1-MB9) in einem konischen Doppelschneckenextruder (DSM Xplore, 15cc) unter Stickstoff compoundiert. Das reine Polyamid, d. h. ohne Zusätze, wurde auf die gleiche Weise verarbeitet, um die Referenzprobe zu erhalten. Es wurden folgende Parameter verwendet:

Verweilzeit: 3 min
Gehäusetemperatur: 260 °C
Schmelzetemperatur: 240 °C bis 245 °C
Drehzahl: 100 Upm

Spritzgussverarbeitung:

Die Spritzgussverarbeitung der compoundierten Polymere wurde auf einer DSM-Micro-Injection Moulding Apparatur 10cc durchgeführt. Hierfür wurde der geschmolzene Compound unter Stickstoff direkt in den Zylinder der Spritzgussmaschine gefüllt. Die Schmelze wurde anschließend in eine polierte rechteckige Form mit den Maßen (30 mm x 30 mm x 1,27 mm) gespritzt.
Es wurden folgende Parameter verwendet:

Form: Plättchen poliert; 30 mm x 30 mm x 1,27 mm
Formtemperatur: 60 °C
Gehäusetemperatur: 260 °C
Einspritzdruck: 10 bis 12 bar

Messmethoden:
Optische Eigenschaften: Haze und Transmission
Haze und Transmission wurden mit einem haze-guard plus Messinstrument (BYK, Gardner®, Illumination CIE-E) bei Raumtemperatur gemessen. Die Messung erfolgte nach ASTM D-1003 in der 2017 gültigen Fassung. Die Haze-Werte wurden 24 bis 48 h nach dem Spritzguss gemessen.
Rezepturen für die Masterbatchherstellung

| Beispiel | A (Gew%) | B (Gew%) | C1 (Gew%) | C2 (Gew%) | C3 (Gew%) | C4 (Gew%) | C5 (Gew%) | CV1 (Gew%) | CV2 (Gew%) | CV3 (Gew%) | CV4 (Gew%) |
|---|---|---|---|---|---|---|---|---|---|---|---|
| MB1 | 97,06 | - | 2,94 | - | - | - | - | - | - | - | - |
| MB2 | 97,06 | - | - | 2,94 | - | - | - | - | - | - | - |
| MB3 | 97,06 | - | - | - | 2,94 | - | - | - | - | - | - |
| MB4 | 97,06 | - | - | - | - | 2,94 | - | - | - | - | - |
| MB5 | 97,06 | - | - | - | - | - | 2,94 | - | - | - | - |
| MB6 | 97,06 | - | - | - | - | - | - | 2,94 | - | - | - |
| MB7 | 97,06 | - | - | - | - | - | - | - | 2,94 | - | - |
| MB8 | 97,06 | - | - | - | - | - | - | - | - | 2,94 | - |
| MB9 | 97,06 | - | - | - | - | - | - | - | - | - | 2,94 |

Rezepturen für die Compoundherstellung

| Beispiel | A (Gew%) | AB (Gew%) | MB1 (Gew%) | MB2 (Gew%) | MB3 (Gew%) | MB4 (Gew%) | MB5 (Gew%) | MB6 (Gew%) | MB7 (Gew%) | MB8 (Gew%) | MB9 (Gew% ) |
|---|---|---|---|---|---|---|---|---|---|---|---|
| V1 | 100 | | | | | | | | | | |
| V2 | 99,74 | | 0,26 | | | | | | | | |
| V3 | 99,48 | | 0,52 | | | | | | | | |
| V4 | 99,74 | | | 0,26 | | | | | | | |
| V5 | 99,48 | | | 0,52 | | | | | | | |
| V6 | 99,74 | | | | 0,26 | | | | | | |
| V7 | 99,48 | | | | 0,52 | | | | | | |
| V8 | 99,74 | | | | | 0,26 | | | | | |
| V9 | 99,48 | | | | | 0,52 | | | | | |
| V10 | 99,74 | | | | | | 0,26 | | | | |
| V11 | 99,48 | | | | | | 0,52 | | | | |
| V12 | 99,74 | | | | | | | 0,26 | | | |
| V13 | 99,48 | | | | | | | 0,52 | | | |
| V14 | 99,74 | | | | | | | | 0,26 | | |
| V15 | 99,48 | | | | | | | | 0,52 | | |
| V16 | 99,74 | | | | | | | | | 0,26 | |
| V17 | 99,48 | | | | | | | | | 0,52 | |
| V18 | 99,74 | | | | | | | | | | 0,26 |
| V19 | 99,48 | | | | | | | | | | 0,52 |
| V20 | | 100 | | | | | | | | | |
| 1 | | 99,74 | 0,26 | | | | | | | | |
| 2 | | 99,48 | 0,52 | | | | | | | | |
| 3 | | 99,74 | | 0,26 | | | | | | | |
| 4 | | 99,48 | | 0,52 | | | | | | | |
| 5 | | 99,74 | | | 0,26 | | | | | | |

(fortgesetzt)

| Beispiel | A (Gew%) | AB (Gew%) | MB1 (Gew%) | MB2 (Gew%) | MB3 (Gew%) | MB4 (Gew%) | MB5 (Gew%) | MB6 (Gew%) | MB7 (Gew%) | MB8 (Gew%) | MB9 (Gew% ) |
|---|---|---|---|---|---|---|---|---|---|---|---|
| 6 | | 99,48 | | | 0,52 | | | | | | |
| 7 | | 99,74 | | | | 0,26 | | | | | |
| 8 | | 99,48 | | | | 0,52 | | | | | |
| 9 | | 99,74 | | | | | 0,26 | | | | |
| 10 | | 99,48 | | | | | 0,52 | | | | |
| V21 | | 99,74 | | | | | | 0,26 | | | |
| V22 | | 99,48 | | | | | | 0,52 | | | |
| V23 | | 99,74 | | | | | | | 0,26 | | |
| V24 | | 99,48 | | | | | | | 0,52 | | |
| V25 | | 99,74 | | | | | | | | 0,26 | |
| V26 | | 99,48 | | | | | | | | 0,52 | |
| V27 | | 99,74 | | | | | | | | | 0,26 |
| V28 | | 99,48 | | | | | | | | | 0,52 |

Ergebnisse:

Zusammensetzung der Versuchsbeispiele:

| Beispiel | A | B | Farbmittel | Farbstoffkonzentration | Haze | Transmission | relative Änderung Haze zur Referenz |
|---|---|---|---|---|---|---|---|
| | | | | | Plättchen mit Wanddicke von 1,27 mm | | |
| | [Gew. %] | [Gew. %] | | [ppm] | [%] | [%] | |
| V1 | 100 | - | ohne | | 100 | 78 | Referenz |
| V2 | 100 | - | C1 | 69 | 97,5 | 39,8 | -2,5% |
| V3 | 100 | - | C1 | 156 | 96,7 | 26,7 | -3,3% |
| V4 | 100 | - | C2 | 69 | 92 | 40 | -8,0% |
| V5 | 100 | - | C2 | 156 | 87 | 26 | -13,0% |
| V6 | 100 | - | C3 | 69 | 92 | 35 | -8,0% |
| V7 | 100 | - | C3 | 156 | 88 | 21 | -12,0% |
| V8 | 100 | - | C4 | 69 | 96,6 | 58,7 | -3,4% |
| V9 | 100 | - | C4 | 156 | 96,6 | 47,2 | -3,4% |
| V10 | 100 | - | C5 | 69 | 96 | 43 | -4,0% |
| V11 | 100 | - | C5 | 156 | 93 | 30 | -7,0% |
| V12 | 100 | - | CV1 | 69 | 94 | 60 | -6,0% |
| V13 | 100 | - | CV1 | 156 | 93 | 54 | -7,0% |
| V14 | 100 | - | CV2 | 69 | 96,5 | 82,7 | -3,5% |
| V15 | 100 | - | CV2 | 156 | 97,2 | 82,3 | -2,8% |
| V16 | 100 | - | CV3 | 69 | 97,3 | 82,8 | -2,7% |
| V17 | 100 | - | CV3 | 156 | 97 | 81,5 | -3,0% |
| V18 | 100 | - | CV4 | 69 | 99,6 | 45,1 | -0,4% |
| V19 | 100 | - | CV4 | 156 | 98,1 | 35,1 | -1,9% |
| V20 | 99 | 1 | ohne | | 21,9 | 77,7 | Referenz |
| 1 | 99 | 1 | C1 | 69 | 15,4 | 41,7 | -29,7% |
| 2 | 99 | 1 | C1 | 156 | 13,8 | 24,7 | -37,0% |
| 3 | 99 | 1 | C2 | 69 | 17,2 | 55,8 | -21,5% |
| 4 | 99 | 1 | C2 | 156 | 12,6 | 40,7 | -42,5% |
| 5 | 99 | 1 | C3 | 69 | 13,7 | 49,5 | -37,4% |
| 6 | 99 | 1 | C3 | 156 | 12 | 33,7 | -45,2% |
| 7 | 99 | 1 | C4 | 69 | 16,8 | 53,6 | -23,3% |
| 8 | 99 | 1 | C4 | 156 | 15,9 | 42 | -27,4% |
| 9 | 99 | 1 | C5 | 69 | 16 | 56,3 | -26,9% |
| 10 | 99 | 1 | C5 | 156 | 9,8 | 43 | -55,3% |
| V21 | 99 | 1 | CV1 | 69 | 17,6 | 66,8 | -19,6% |
| V22 | 99 | 1 | CV1 | 156 | 19,7 | 71,3 | -10,0% |
| V23 | 99 | 1 | CV2 | 69 | 27,5 | 77,3 | 25,6% |

(fortgesetzt)

| Beispiel | A | B | Farbmittel | Farbstoffkonzentration | Haze | Transmission | relative Änderung Haze zur Referenz |
|---|---|---|---|---|---|---|---|
| | | | | | Plättchen mit Wanddicke von 1,27 mm | | |
| | [Gew. %] | [Gew. %] | | [ppm] | [%] | [%] | |
| V24 | 99 | 1 | CV2 | 156 | 28,7 | 76,9 | 31,1% |
| V25 | 99 | 1 | CV3 | 69 | 27,2 | 76,1 | 24,2% |
| V26 | 99 | 1 | CV3 | 156 | 31,1 | 74,4 | 42,0% |
| V27 | 99 | 1 | CV4 | 69 | 24,3 | 45,5 | 11,0% |
| V28 | 99 | 1 | CV4 | 156 | 27,9 | 32,3 | 27,4% |

Erfindungsgemäße Beispiele 1 bis 10: Die Zugabe von Komponente C zu der Polyamid-Zusammensetzung AB führt zu einer relativen Haze-Abnahme um mindestens 20 % bei 69 ppm bzw. mindestens 25 % bei 156 ppm Anteil an Komponente C. Nicht-erfindungsgemäße Beispiele sind Polyamid-Zusammensetzungen aus Komponente A und Komponente C (ohne Komponente B) sowie Polyamid-Zusammensetzungen aus den Komponenten A und CV sowie A, B und CV. Bei diesen beträgt die relative Haze-Abnahme jeweils weniger als 20 % bei 69 ppm an Komponente C bzw. CV und weniger als 25 % bei 156 ppm an Komponente C bzw. CV.

Wie aus den Beispielen und den Vergleichsbeispielen hervorgeht, sind Anthrachinon-, Benzimidazolon- und Perinon-Farbmittel geeignet, die optischen Eigenschaften der Formmassen zu verbessern. Andere Farbmittel, wie Chromatkomplexe, Perylen-Farbstoffe, Naphthalimid-Farbstoffe oder Benzanthron-Farbstoffe, führten zu keiner oder zu nicht ausreichender Verbesserung der optischen Eigenschaften.

## Patentansprüche

**1.** Verwendung von Farbmitteln, ausgewählt aus Anthrachinon-Farbmitteln, Benzimidazolon-Farbmitteln und Perinon-Farbmitteln, in Formmassen, die mindestens ein Polyamid und mindestens eine Verbindung der allgemeinen Formel (I) enthalten

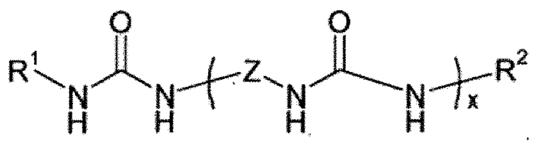

(I),

wobei

x für 1, 2 oder 3 steht;

$R^1$ und $R^2$ unabhängig voneinander aus Wasserstoff, linearem $C_1$-$C_7$-Alkyl, verzweigtem $C_3$-$C_{10}$-Alkyl, unsubstituiertem oder substituiertem $C_3$-$C_{12}$-Cycloalkyl, unsubstituiertem oder substituiertem $C_3$-$C_{12}$-Cycloalkyl-$C_1$-$C_4$-alkyl, unsubstituiertem oder substituiertem Aryl und unsubstituiertem oder substituiertem Aryl-$C_1$-$C_4$-alkyl ausgewählt sind und

Z aus $C_3$-$C_{10}$-Alkandiyl, unsubstituiertem oder substituiertem Arylen, unsubstituiertem oder substituiertem Arylen-$C_1$-$C_4$-alkylen-arylen, unsubstituiertem oder substituiertem Heteroarylen, unsubstituiertem oder substituiertem Heteroarylen-$C_1$-$C_4$-alkylen-heteroarylen, unsubstituiertem oder substituiertem $C_5$-$C_8$-Cyclo-alkylen, unsubstituiertem oder substituiertem $C_5$-$C_8$-Cycloalkylen-$C_1$-$C_4$-alkylen-$C_5$-$C_8$-cyclo-alkylen, unsubstituiertem oder substituiertem Heterocycloalkylen und unsubstituiertem oder substituiertem Heterocydoalkylen-$C_1$-$C_4$-alkylen-heterocycloalkylen ausgewählt ist,

zur Verringerung des Trübungswertes.(welcher nach ASTM D1003 und dem in der Beschreibung genannten Verfahren bestimmt wird).

**2.** Verwendung nach Anspruch 1, **dadurch gekennzeichnet, dass** die Farbmittel in einer Menge von 10 bis 1000 ppm, bezogen auf die gesamte Formmasse, eingesetzt werden.

**3.** Verwendung nach Anspruch 1 oder 2, **dadurch gekennzeichnet, dass** die Farbmittel in einem Gewichtsverhältnis zu der mindestens einen Verbindung der allgemeinen Formel (I) im Bereich von 1 : 1 bis 1 : 1000 eingesetzt werden.

**4.** Formmasse, enthaltend mindestens ein Polyamid als Komponente A,

0,1 bis 2 Gew.-% mindestens einer Verbindung der allgemeinen Formel (I)

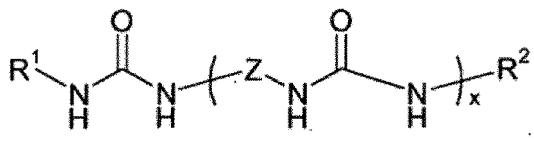

(I),

wobei
x für 1, 2 oder 3 steht,
$R^1$ und $R^2$ unabhängig voneinander aus Wasserstoff, linearem $C_1$-$C_7$-Alkyl, verzweigtem $C_3$-$C_{10}$-Alkyl, unsubstituiertem oder substituiertem $C_3$-$C_{12}$-Cycloalkyl, unsubstituiertem oder substituiertem $C_3$-$C_{12}$-Cycloalkyl-$C_1$-$C_4$-alkyl, unsubstituiertem oder substituiertem Aryl und unsubstituiertem oder substituiertem Aryl-$C_1$-$C_4$-alkyl ausgewählt sind und
Z aus $C_3$-$C_{10}$-Alkandiyl, unsubstituiertem oder substituiertem Arylen, unsubstituiertem oder substituiertem Arylen-$C_1$-$C_4$-alkylen-arylen, unsubstituiertem oder substituiertem Heteroarylen, unsubstituiertem oder substituiertem Heteroarylen-$C_1$-$C_4$-alkylen-heteroarylen, unsubstituiertem oder substituiertem $C_5$-$C_8$-Cyclo-alkylen, unsubstituiertem oder substituiertem $C_5$-$C_8$-Cycloalkylen-$C_1$-$C_4$-alkylen-$C_5$-$C_8$-cyclo-alkylen, unsubstituiertem oder substituiertem Heterocycloalkylen und unsubstituiertem oder substituiertem Heterocycloalkylen-$C_1$-$C_4$-alkylen-heterocycloalkylen ausgewählt ist, als Komponente B
sowie
10 bis 1000 ppm mindestens eines Farbmittels, ausgewählt aus Anthrachinon-Farbmitteln, Benzimidazolon-Farbmitteln und Perinon-Farbmitteln und Gemischen davon, als Komponente C,
wobei sich die Mengen auf die gesamte Formmasse beziehen.

**5.** Formmasse nach Anspruch 4, **dadurch gekennzeichnet, dass** sie mindestens 60 Gew.-%, vorzugsweise mindestens 80 Gew.-%, besonders bevorzugt mindestens 90 Gew.-% der Komponente A enthält.

**6.** Formmasse nach Anspruch 4 oder 5, **dadurch gekennzeichnet, dass** die Menge der Komponente B 0,2 bis 1,7 Gew.-%, vorzugsweise 0,5 bis 1,5 Gew.-% beträgt.

**7.** Formmasse nach einem der Ansprüche 4 bis 6, **dadurch gekennzeichnet, dass** die Menge der Komponente C 20 bis 500 ppm, vorzugsweise 50 bis 200 ppm beträgt.

**8.** Formmasse nach einem der Ansprüche 4 bis 7, **dadurch gekennzeichnet, dass** das Gewichtsverhältnis von Komponente C zu Komponente B 1 : 1 bis 1 : 1000, vorzugsweise 1 : 5 bis 1 : 700, besonders bevorzugt 1 : 10 bis 1 : 500, insbesondere 1 : 25 bis 1 : 300 beträgt.

**9.** Formmasse nach einem der Ansprüche 4 bis 8, **dadurch gekennzeichnet, dass** in der Verbindung der allgemeinen Formel (I) Z für trans-1,4-Cyclohexylen steht.

**10.** Formmasse nach Anspruch 9, **dadurch gekennzeichnet, dass** in der Verbindung der allgemeinen Formel (I) $R^1$ und $R^2$ gleich sind und aus Wasserstoff, tert.-Butyl, 1,1-Dimethylpropyl, 1,5-Dimethylhexyl, 1,1,3,3-Tetramethylbutyl und 1-Adamantyl ausgewählt sind, Z für trans-1,4-Cyclohexylen steht und x für 1 steht.

**11.** Verwendung nach einem der Ansprüche 1 bis 3 oder Formmasse nach einem der Ansprüche 4 bis 10, **dadurch gekennzeichnet, dass** die Farbmittel Farbstoffe, Pigmente oder deren Gemische sind.

**12.** Verfahren zur Herstellung von Formmassen nach einem der Ansprüche 4 bis 11, **dadurch gekennzeichnet, dass** man die Komponenten A, B und C und gegebenenfalls weitere Inhaltsstoffe miteinander vermischt.

**13.** Verwendung der Formmassen nach einem der Ansprüche 4 bis 11 zur Herstellung von Fasern, Folien oder Formkörpern.

**14.** Fasern, Folien oder Formkörper aus einer Formmasse nach einem der Ansprüche 4 bis 11.

**Claims**

**1.** The use of colorants selected from anthraquinone colorants, benzimidazolone colorants and perinone colorants, in molding compositions comprising at least one polyamide and at least one compound of the general formula (I)

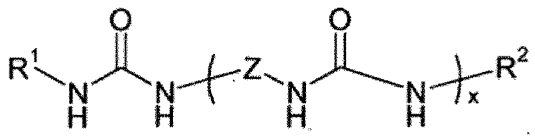

(I),

where

x is 1, 2 or 3;
$R^1$ and $R^2$ are mutually independently selected from hydrogen, linear $C_1$-$C_7$-alkyl, branched $C_3$-$C_{10}$-alkyl, unsubstituted or substituted $C_3$-$C_{12}$-cycloalkyl, unsubstituted or substituted $C_3$-$C_{12}$-cycloalkyl-$C_1$-$C_4$-alkyl, unsubstituted or substituted aryl and unsubstituted or substituted aryl-$C_1$-$C_4$-alkyl, and
Z is selected from $C_3$-$C_{10}$-alkanediyl, unsubstituted or substituted arylene, unsubstituted or substituted arylene-$C_1$-$C_4$-alkylenearylene, unsubstituted or substituted heteroarylene, unsubstituted or substituted heteroarylene-$C_1$-$C_4$-alkylene-heteroarylene, unsubstituted or substituted $C_5$-$C_8$-cycloalkylene, unsubstituted or substituted $C_5$-$C_8$-cycloalkylene-$C_1$-$C_4$-alkylene-$C_5$-$C_8$-cycloalkylene, unsubstituted or substituted heterocycloalkylene and unsubstituted or substituted heterocycloalkylene-$C_1$-$C_4$-alkyleneheterocycloalkylene.
to reduce the haze value (which is determined to ASTM D1003 and by the method specified in the description).

**2.** The use according to claim 1, wherein the quantity used of the colorants is from 10 to 1000 ppm, based on the entire molding composition.

**3.** The use according to claim 1 or 2, wherein the ratio by weight in which the colorants are used in relation to the at least one compound of the general formula (I) is in the range from 1:1 to 1:1000.

**4.** A molding composition comprising, as component A, at least one polyamide, as component B, from 0.1 to 2% by weight of at least one compound of the general formula (I)

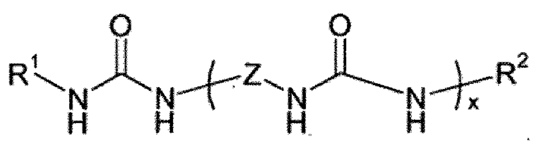

(I),

where

x is 1, 2 or 3;
$R^1$ and $R^2$ are mutually independently selected from hydrogen, linear $C_1$-$C_7$-alkyl, branched $C_3$-$C_{10}$-alkyl, unsubstituted or substituted $C_3$-$C_{12}$-cycloalkyl, unsubstituted or substituted $C_3$-$C_{12}$-cycloalkyl-$C_1$-$C_4$-alkyl, unsubstituted or substituted aryl and unsubstituted or substituted aryl-$C_1$-$C_4$-alkyl, and
Z is selected from $C_3$-$C_{10}$-alkanediyl, unsubstituted or substituted arylene, unsubstituted or substituted arylene-$C_1$-$C_4$-alkylenearylene, unsubstituted or substituted heteroarylene, unsubstituted or substituted heteroarylene-$C_1$-$C_4$-alkylene-heteroarylene, unsubstituted or substituted $C_5$-$C_8$-cycloalkylene, unsubstituted or substituted $C_5$-$C_{80}$-cycloalkylene-$C_1$-$C_4$-alkylene-$C_5$-$C_8$-cycloalkylene, unsubstituted or substituted heterocycloalkylene and unsubstituted or substituted heterocycloalkylene-$C_1$-$C_4$-alkylene-heterocycloalkylene,

and also,
as component C, from 10 to 1000 ppm of at least one colorant selected from anthraquinone colorants, benzimidazolone colorants and perinone colorants and mixtures thereof,
where the quantities are based on the entire molding composition.

5. The molding composition according to claim 4, which comprises at least 60% by weight of component A, preferably at least 80% by weight, particularly preferably at least 90% by weight.

6. The molding composition according to claim 4 or 5, wherein the quantity of component B is from 0.2 to 1.7% by weight, preferably from 0.5 to 1.5% by weight.

7. The molding composition according to any of claims 4 to 6, wherein the quantity of component C is from 20 to 500 ppm, preferably from 50 to 200 ppm.

8. The molding composition according to any of claims 4 to 7, wherein the ratio by weight of component C to component B is from 1:1 to 1:1000, preferably from 1:5 to 1:700, particularly preferably from 1:10 to 1:500, in particular from 1:25 to 1:300.

9. The molding composition according to any of claims 4 to 8, wherein Z in the compound of the general formula (I) is trans-1,4-cyclohexylene.

10. The molding composition according to claim 9, wherein in the compound of the general formula (I) $R^1$ and $R^2$ are identical and are selected from hydrogen, tert-butyl, 1,1-dimethylpropyl, 1,5-dimethylhexyl, 1,1,3,3-tetramethylbutyl and 1-adamantyl, Z is trans-1,4-cyclohexylene and x is 1.

11. The use according to any of claims 1 to 3 or the molding composition according to any of claims 4 to 10, **characterized in that** the colorants are dyes, pigments or mixtures of these.

12. A process for the production of molding compositions according to any of claims 4 to 11, which comprises mixing, with one another, components A, B and C and optionally other ingredients.

13. The use of the molding compositions according to any of claims 4 to 11 for the production of fibers, films or moldings.

14. A fiber, film or molding made of a molding composition according to any of claims 4 to 11.

## Revendications

1. Utilisation de matières colorantes, choisies parmi des matières colorantes de type anthraquinone, des matières colorantes de type benzimidazolone et des matières colorantes de type périnone, dans des masses à mouler, qui contiennent au moins un polyamide et au moins un composé de formule générale (I)

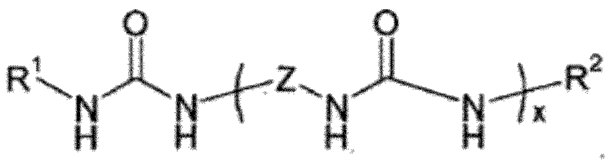

(I),

x représentant 1, 2 ou 3 ;

$R^1$ et $R^2$ étant choisis indépendamment l'un de l'autre parmi hydrogène, $C_{1-7}$ alkyle linéaire, $C_{3-10}$ alkyle ramifié, $C_{3-12}$ cycloalkyle non substitué ou substitué, $C_{3-12}$ cycloalkyl-$C_{1-4}$ alkyle non substitué ou substitué, aryle non substitué ou substitué et aryl-$C_{1-4}$ alkyle non substitué ou substitué et
Z étant choisi parmi $C_{3-10}$ alcanediyle, arylène non substitué ou substitué, arylène-$C_{1-4}$ alkylène-arylène non substitué ou substitué, hétéroarylène non substitué ou substitué, hétéroarylène-$C_{1-4}$ alkylène-hétéroarylène non substitué ou substitué, $C_{5-8}$ cyclo-alkylène non substitué ou substitué, $C_{5-8}$ cyclo-alkylène-$C_{1-4}$ alkylène-$C_{5-8}$ cyclo-alkylène non substitué ou substitué, hétérocycloalkylène non substitué ou substitué et hétérocy-

cloalkylène-$C_{1-4}$ alkylène-hétérocycloalkylène non substitué ou substitué, pour la réduction de la valeur de trouble (qui est déterminée selon la norme ASTM D1003 et selon le procédé mentionné dans la description).

2. Utilisation selon la revendication 1, **caractérisée en ce que** les matières colorantes sont utilisées en une quantité de 10 à 1 000 ppm, par rapport à la masse à mouler totale.

3. Utilisation selon la revendication 1 ou 2, **caractérisée en ce que** les matières colorantes sont utilisées en un rapport en poids par rapport à l'au moins un composé de formule générale (I) dans la plage de 1 : 1 à 1 : 1 000.

4. Masse à mouler, contenant au moins un polyamide en tant que composant A,

0,1 à 2 % en poids d'au moins un composé de formule générale (I)

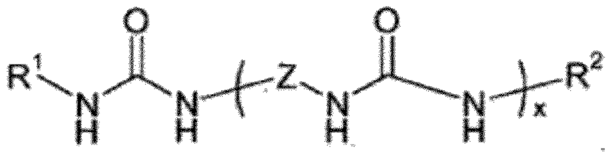

(I),

x représentant 1, 2 ou 3 ;
$R^1$ et $R^2$ étant choisis indépendamment l'un de l'autre parmi hydrogène, $C_{1-7}$ alkyle linéaire, $C_{3-10}$ alkyle ramifié, $C_{3-12}$ cycloalkyle non substitué ou substitué, $C_{3-12}$ cycloalkyl-$C_{1-4}$ alkyle non substitué ou substitué, aryle non substitué ou substitué et aryl-$C_{1-4}$ alkyle non substitué ou substitué et
Z étant choisi parmi $C_{3-10}$ alcanediyle, arylène non substitué ou substitué, arylène-$C_{1-4}$ alkylène-arylène non substitué ou substitué, hétéroarylène non substitué ou substitué, hétéroarylène-$C_{1-4}$ alkylène-hétéroarylène non substitué ou substitué, $C_{5-8}$ cyclo-alkylène non substitué ou substitué, $C_{5-8}$ cyclo-alkylène-$C_{1-4}$ alkylène-$C_{5-8}$ cyclo-alkylène non substitué ou substitué, hétérocycloalkylène non substitué ou substitué et hétérocycloalkylène-$C_{1-4}$ alkylène-hétérocycloalkylène non substitué ou substitué, en tant que composant B
ainsi que
10 à 1 000 ppm d'au moins une matière colorante, choisie parmi des matières colorantes de type anthraquinone, des matières colorantes de type benzimidazolone et des matières colorantes de type périnone et des mélanges correspondants, en tant que composant C,
les quantités se rapportant à la masse à mouler totale.

5. Masse à mouler selon la revendication 4, **caractérisée en ce qu'**elle contient au moins 60 % en poids, de préférence au moins 80 % en poids, particulièrement préférablement au moins 90 % en poids du composant A.

6. Masse à mouler selon la revendication 4 ou 5, **caractérisée en ce que** la quantité du composant B est de 0,2 à 1,7 % en poids, de préférence 0,5 à 1,5 % en poids.

7. Masse à mouler selon l'une quelconque des revendications 4 à 6, **caractérisée en ce que** la quantité du composant C est de 20 à 500 ppm, de préférence de 50 à 200 ppm.

8. Masse à mouler selon l'une quelconque des revendications 4 à 7, **caractérisée en ce que** le rapport en poids de composant C sur composant B est de 1 : 1 à 1 : 1 000, de préférence de 1 : 5 à 1 : 700, particulièrement préférablement de 1 : 10 à 1 : 500, en particulier de 1 : 25 à 1 : 300.

9. Masse à mouler selon l'une quelconque des revendications 4 à 8, **caractérisée en ce que** Z représente trans-1,4-cyclohexylène dans le composé de formule générale (I).

10. Masse à mouler selon la revendication 9, **caractérisée en ce que**, dans le composé de formule générale (I), $R^1$ et $R^2$ sont égaux et sont choisis parmi hydrogène, tert-butyle, 1,1-diméthylpropyle, 1,5-diméthylhexyle, 1,1,3,3-tétraméthylbutyle et 1-adamantyle, Z représente trans-1,4-cyclohexylène et x représente 1.

11. Utilisation selon l'une quelconque des revendications 1 à 3 ou masse à mouler selon l'une quelconque des revendications 4 à 10, **caractérisée en ce que** les matières colorantes sont des colorants, des pigments ou leurs mélanges.

**12.** Procédé pour la préparation de masses à mouler selon l'une quelconque des revendications 4 à 11, **caractérisé en ce qu'**on mélange ensemble les composants A, B et C et éventuellement des ingrédients supplémentaires.

**13.** Utilisation des masses à mouler selon l'une quelconque des revendications 4 à 11 pour la préparation de fibres, de feuilles ou de corps moulés.

**14.** Fibres, feuilles ou corps moulés composé(e)s d'une masse à mouler selon l'une quelconque des revendications 4 à 11.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- WO 2013139802 A
- DE 2710595
- EP 1095030 A
- EP 0584567 A
- DE 102004049342 A
- DE 102004050025 A

### In der Beschreibung aufgeführte Nicht-Patentliteratur

- *Journal für praktische Chemie,* 1915, vol. 91, 1-38
- *Chem. Eur. J.,* 1997, vol. 3, 1238-1243
- **FRAGE.** Synergisten. Hanser Verlag, 1989